(19) Europäisches Patentamt
European Patent Office
Office européen des brevets

(11) **EP 4 488 321 A1**

(12) **EUROPEAN PATENT APPLICATION**
published in accordance with Art. 153(4) EPC

(43) Date of publication:
**08.01.2025 Bulletin 2025/02**

(21) Application number: 23881131.9

(22) Date of filing: **18.04.2023**

(51) International Patent Classification (IPC):
*C08J 9/28* (2006.01)   *C08J 9/26* (2006.01)
*C08J 9/00* (2006.01)   *H01M 50/489* (2021.01)
*H01M 50/491* (2021.01)   *H01M 50/494* (2021.01)
*H01M 50/417* (2021.01)

(52) Cooperative Patent Classification (CPC):
**C08J 9/28; H01M 4/80; H01M 50/491;** C08J 9/00;
C08J 9/26; H01M 50/417; H01M 50/489;
H01M 50/494

(86) International application number:
**PCT/CN2023/088836**

(87) International publication number:
**WO 2024/087536 (02.05.2024 Gazette 2024/18)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.10.2022 PCT/CN2022/128110**

(71) Applicant: **Contemporary Amperex Technology
Co., Limited
Ningde, Fujian 352100 (CN)**

(72) Inventors:
• XU, Chong
  Ningde, Fujian 352100 (CN)
• YANG, Jianrui
  Ningde, Fujian 352100 (CN)
• LI, Cheng
  Ningde, Fujian 352100 (CN)

(74) Representative: **Ran, Handong et al
Maucher Jenkins
Seventh Floor Offices
Artillery House
11-19 Artillery Row
London SW1P 1RT (GB)**

(54) **POLYOLEFIN BASE FILM AND PREPARATION METHOD THEREFOR, ISOLATION FILM, SECONDARY BATTERY AND ELECTRICAL DEVICE**

(57) The present application relates to a polyolefin base film. By means of optimizing the curvature of a hole structure in the polyolefin base film, the polyolefin base film has a uniform hole structure, thus the uniformity of the base film is increased, the performance deviation of the base film is reduced, and the air permeability of the base film is also effectively ensured. Meanwhile, the thickness of the polyolefin base film is ultra-thin. When the thickness of the polyolefin base film is reduced by 1 μm, the energy density of a battery cell can be increased by about 0.7%. Therefore, by means of controlling the thickness to be 7 μm or less, the energy density of the battery cell is increased. When the polyolefin base film is used as an isolation film for a battery, the electrical performance of the battery can be enhanced, comprising a reduction in battery internal resistance, direct-current internal resistance, self-discharge rate, short-circuit rate, etc. The present application also relates to a preparation method for a polyolefin base film, an isolation film, a secondary battery and an electrical device.

FIG. 1

**Description**

**TECHNICAL FIELD**

This application pertains to the technical field of batteries, and specifically relates to a polyolefin-based film and a preparation method thereof, a separator, a secondary battery, and an electric apparatus.

**BACKGROUND**

Secondary batteries have been widely used in fields such as battery electric vehicles, hybrid electric vehicles, and smart grids. In a secondary battery, a separator is used to separate positive and negative electrodes to prevent a short circuit caused by direct contact between the positive and negative electrodes. With the increasing demand for portable products, ultra-thin separators have begun to be widely used. However, existing polyolefin-based films used to prepare ultra-thin separators cannot achieve both small thickness and uniform pore structure, resulting in significant performance deviations of the base films.

Therefore, there is an urgent need to develop a polyolefin-based film that can achieve both thickness and uniform pore structure.

**SUMMARY**

In view of the problems described in the background, this application provides a polyolefin-based film. Such polyolefin-based film can achieve both small thickness and uniform pore structure.

A polyolefin-based film provided according to a first aspect of this application includes a pore structure. The polyolefin-based film includes a pore structure, thickness of the polyolefin-based film is $\leq 7\ \mu$m, and tortuosity of the pore structure is 7-10.

In the technical solution of the embodiments of this application, through optimization of the tortuosity of the pore structure, the polyolefin-based film has a uniform pore structure, thereby improving consistency of the base film, reducing performance deviation of the base film, implementing fast ion transmission, and effectively ensuring air permeability of the base film. Additionally, the polyolefin-based film of this application is ultra-thin. For every 1 $\mu$m reduction in thickness, energy density of a battery cell can increase by approximately 0.7%. Therefore, with the thickness controlled to be below 7 $\mu$m, the energy density of the battery cell is improved. When the polyolefin-based film is used as a separator in a battery, electrical performance of the battery can be improved, including reducing battery internal resistance, direct current resistance, self-discharge rate, short-circuit rate, and the like.

In some embodiments, according to the first aspect, a first example of the first aspect is proposed, where the tortuosity of the pore structure is 7.5-9.5; and optionally, the tortuosity of the pore structure is 7.5-9.

In some embodiments, according to the first aspect, a first example of the first aspect is proposed, where a maximum pore size of the pore structure is $\leq 45$ nm; optionally, the maximum pore size of the pore structure is $\leq 40$ nm; and further optionally, the maximum pore size of the pore structure is 20 nm-40 nm.

In some embodiments, according to the first aspect, a first example of the first aspect is proposed, where the thickness of the polyolefin-based film is 2 $\mu$m-6.2 $\mu$m; and optionally, the thickness of the polyolefin-based film is 4 $\mu$m-6.2 $\mu$m.

In this design, the thickness of the polyolefin-based film, the tortuosity of the pore structure, and the maximum pore size of the pore structure are optimized, further improving the consistency of the polyolefin-based film, reducing the performance deviation of the base film, improving the air permeability of the base film, and increasing the energy density of the battery cell.

In some embodiments, according to the first aspect, a second example of the first aspect is proposed, where the polyolefin-based film includes polyolefin with a weight-average molecular weight Mw of more than 500,000; and optionally, the polyolefin-based film includes polyolefin with a weight-average molecular weight Mw of 500,000-1,500,000.

In this design, the use of polyolefin with a weight-average molecular weight Mw of more than 500,000 as a raw material is beneficial for improving the uniformity of pore formation.

In some embodiments, according to the first aspect, a third example of the first aspect is proposed, where a polydispersity index Mw/Mn of the polyolefin is $\leq 3.5$; and optionally, the polydispersity index Mw/Mn of the polyolefin is 1-3.5.

In this design, the optimization of the polydispersity index of the polyolefin is beneficial for reducing the molecular weight distribution width of the polyolefin and improving the molecular weight consistency.

In some embodiments, according to the first aspect, a fourth example of the first aspect is proposed, where the polyolefin is one or both of polyethylene and polypropylene.

In this design, the optimization of polyolefin types is beneficial for further improving the consistency of the polyolefin-based film, increasing the strength and elongation rate of the base film, reducing the thermal shrinkage of the base film, and the like.

In some embodiments, according to the first aspect, a fifth example of the first aspect is proposed, where air permeability of the polyolefin-based film is $\leq$ 180s/100cc.

In this design, the optimization of the air permeability of the polyolefin-based film is beneficial for improving the air permeability of the separator.

In some embodiments, according to the first aspect, a sixth example of the first aspect is proposed, where a machine-direction elongation rate of the polyolefin-based film is $\geq$ 60%; optionally, the machine-direction elongation rate of the polyolefin-based film is $\geq$ 100%; and further optionally, the machine-direction elongation rate of the polyolefin-based film is 100%-120%; and a transverse-direction elongation rate of the polyolefin-based film is $\geq$ 100%; optionally, the transverse-direction elongation rate of the polyolefin-based film is $\geq$ 110%; and further optionally, the transverse-direction elongation rate of the polyolefin-based film is 110%-160%.

In this design, the increase in elongation rate can effectively improve the toughness of the separator. When metal particles (possibly from the operating environment, positive and negative electrode plates, separator, or the like) appear during the winding process, the separator can effectively wrap the particles, preventing the battery cell from being punctured and improving the manufacturability of the battery cell.

In some embodiments, according to the first aspect, a seventh example of the first aspect is proposed, where the polyolefin-based film has a machine-direction thermal shrinkage of $\leq$ 4% and a transverse-direction thermal shrinkage of $\leq$ 4% at 115°C.

In this design, the optimization of the thermal shrinkage of the polyolefin-based film can effectively improve the thermal stability of the separator, enhancing the safety performance of the battery cell.

In some embodiments, according to the first aspect, an eighth example of the first aspect is proposed, where the polyolefin-based film meets at least one of the following conditions (1) to (4):

(1) the polyolefin-based film has a puncture strength of $\geq$ 270 gf;
(2) the polyolefin-based film has a machine-direction tensile strength of $\geq$ 2000 kgf/cm$^2$ and a transverse-direction tensile strength of $\geq$ 2000 kgf/cm$^2$;
(3) the polyolefin-based film has a porosity of 25%-40%; and
(4) the polyolefin-based film has a surface density of 2-5 g/m$^2$.

In this design, the optimization of the strength of the polyethylene-based porous film is beneficial for improving the tolerance performance of the separator and effectively ensure the yield rate of the separator process. The optimization of the pore structure of the polyethylene-based porous film is beneficial for ensuring pore size consistency and implementing effective ion conduction.

A second aspect of this application provides a preparation method of polyolefin-based film, including:

mixing polyolefin and a pore-forming agent and making a resulting mixture into a film;
subjecting the film to biaxial drawing;
removing the pore-forming agent from the biaxially drawn film to form pores; and
subjecting the film formed with the pores to draw-setting and heat-setting to obtain the polyolefin-based film; where the polyolefin-based film includes a pore structure, thickness of the polyolefin-based film is $\leq$ 7 $\mu$m, and tortuosity of the pore structure is 7-10.

In the technical solution of the embodiments of this application, the use of polyolefin with an ultra-high weight-average molecular weight as a raw material, coupled with biaxial drawing, can produce an ultra-thin polyolefin-based film having a pore structure with a tortuosity of 7.5-9.5 and a maximum pore size of $\leq$ 45 nm.

In some embodiments, according to the second aspect, a first example of the second aspect is proposed, where the polyolefin has a weight-average molecular weight Mw of more than 500,000; and optionally, the polyolefin-based film includes polyolefin with a weight-average molecular weight Mw of 500,000-1,500,000.

In some embodiments, according to the second aspect, a first example of the second aspect is proposed, where a proportion of the polyolefin in the mixture is 20wt%-30wt%.

In this design, the optimization of the solid content of the polyolefin is beneficial for improving the thickness uniformity of the film surface, improving the pore size consistency of the base film, and meeting the high elongation rate requirement of the base film. If the solid content of the polyolefin is too high (> 30wt%), the pressure curve of the extruder fluctuates greatly, the thickness uniformity of the film surface is poor, and the pore size consistency of the base film is poor. If the solid content of the polyolefin is too low (< 20wt%), the content of the pore-forming agent such as white oil is too high, the drawing ratio is limited, and the high elongation rate requirement cannot be met. Through optimization of the solid content of the polyolefin, the uniformity of pore formation is improved while meeting the high elongation rate requirement.

In some embodiments, according to the second aspect, a second example of the second aspect is proposed, where the biaxial drawing includes machine-direction drawing and transverse-direction drawing, where a machine-direction drawing ratio is 5-15 times, a transverse-direction drawing ratio is 5-15 times, and the machine-direction drawing ratio and the transverse-direction drawing ratio are not both 5; and optionally, the machine-direction drawing ratio is 6-15 times, and the transverse-direction drawing ratio is 6-15 times.

In this design, through optimization of the machine-direction drawing ratio and the transverse-direction drawing ratio, the thickness of the polyolefin-based film can be further reduced, and the uniformity of pore formation can be improved.

A third aspect of this application provides a separator including the polyolefin-based film according to the first aspect of this application or a polyolefin-based film obtained using the preparation method according to the second aspect of this application.

In the technical solution of the embodiments of this application, since the polyolefin-based film according to the first aspect of this application or the polyolefin-based film obtained using the preparation method according to the second aspect of this application is used, the separator of this application has the advantages of being ultra-thin, having a uniform pore structure, and so on.

In some embodiments, according to the third aspect, a first example of the third aspect is proposed, where the separator further includes a coating provided on at least one surface of the polyolefin-based film.

With a coating provided on the surface of the polyolefin-based film, the electrical performance and safety performance of the battery cell can be improved.

In some embodiments, according to the third aspect, a first example of the third aspect is proposed, where the coating includes a filler. The filler is selected from at least one of inorganic particles, organic particles, and organic-inorganic hybrid particles.

The selection of the filler that is thermally stable and less prone to decomposition can further improve the heat resistance of the separator.

In some embodiments, according to the third aspect, a second example of the third aspect is proposed, where the separator further includes an adhesive layer. The adhesive layer is provided on at least a part of surface of the coating. The adhesive layer includes a granular adhesive, and optionally, the granular adhesive includes at least one of homopolymer or copolymer of acrylate monomers, homopolymer or copolymer of acrylic monomers, and homopolymer or copolymer of fluoroolefin monomers.

The adhesive layer can prevent the coating from falling off, improving the safety performance of the secondary battery. The adhesive layer can also improve the interface between the separator and the electrode, improving the cycling performance of the secondary battery.

A fourth aspect of this application provides a secondary battery including the separator according to the third aspect of this application.

In the technical solution of the embodiments of this application, since the polyolefin-based film according to the first aspect of this application or a polyolefin-based film obtained using the preparation method according to the second aspect of this application is used, the secondary battery of this application has improved energy density and electrical performance.

According to a fifth aspect, an electric apparatus is provided, including the secondary battery according to the fourth aspect of this application.

In the technical solution of the embodiments of this application, since the polyolefin-based film according to the first aspect of this application or a polyolefin-based film obtained using the preparation method according to the second aspect of this application is used, the electric apparatus of this application has improved energy density and electrical performance.

The foregoing description is merely an overview of the technical solution of this application. For a better understanding of the technical means in this application such that they can be implemented according to the content of the specification, and to make the above and other objectives, features and advantages of this application more obvious and easier to understand, the following describes specific embodiments of this application.

## BRIEF DESCRIPTION OF DRAWINGS

FIG. 1 is a pore size distribution diagram of a polyolefin-based film prepared in Example 1 of this application.
FIG. 2 is a pore size distribution diagram of a polyolefin-based film prepared in Comparative Example 1.
FIG. 3 is a pore size distribution diagram of a polyolefin-based film prepared in Comparative Example 2.
FIG. 4 is a schematic diagram of a battery cell according to an embodiment of this application.
FIG. 5 is an exploded view of the battery cell according to the embodiment of this application shown in FIG. 4.

FIG. 6 is a schematic diagram of a battery module according to an embodiment of this application.
FIG. 7 is a schematic diagram of a battery pack according to an embodiment of this application.
FIG. 8 is an exploded view of the battery pack according to the embodiment of this application shown in FIG. 7.
FIG. 9 is a schematic diagram of an electric apparatus using a secondary battery as a power source according to an embodiment of this application.

Description of reference signs:
1. battery pack; 2. upper box body; 3. lower box body; 4. battery module; 5. battery cell; 51. housing; 52. electrode assembly; and 53. top cover assembly.

## DESCRIPTION OF EMBODIMENTS

The following describes example embodiments of this disclosure in more detail with reference to the accompanying drawings. Although example embodiments of this disclosure are shown in the drawings, it should be understood that this disclosure can be implemented in various forms and should not be limited to the embodiments set forth herein. Rather, these embodiments are provided so that this disclosure can be more thoroughly understood and fully convey the scope of this disclosure to those skilled in the art.

Unless otherwise defined, meanings of all technical and scientific terms used in this specification are the same as those commonly understood by persons skilled in the art of this application. The terms used in this specification are merely intended to describe specific embodiments, but not to limit this application. The terms "comprise", "include", and any variants thereof in the descriptions of the specification, claims, and accompanying drawings of this application are intended to cover a non-exclusive inclusion.

For simplicity, only some numerical ranges are explicitly disclosed in this specification. However, any lower limit may be combined with any upper limit to form a range not expressly recorded; any lower limit may be combined with any other lower limit to form a range not expressly recorded; and any upper limit may be combined with any other upper limit to form a range not expressly recorded. In addition, although not explicitly recorded, each point or individual value between endpoints of a range is included in the range. Therefore, each point or individual value may be used as its own lower limit or upper limit to be combined with any other point or individual value or combined with any other lower limit or upper limit to form a range not explicitly recorded.

In the description herein, it should be noted that unless otherwise specified, "above" and "below" include the number itself, and "one or more" means more than two (including two).

Secondary batteries have been widely used in fields such as battery electric vehicles, hybrid electric vehicles, and smart grids. In a secondary battery, a separator is used to separate positive and negative electrodes to prevent a short circuit caused by direct contact between the positive and negative electrodes. With the increasing demand for portable products, ultra-thin separators have begun to be widely used. However, existing polyolefin-based films used to prepare ultra-thin separators cannot achieve both small thickness and uniform pore structure, resulting in significant performance deviations of the base films. Therefore, there is an urgent need to develop a polyolefin-based film that can achieve both thickness and uniform pore structure.

Through in-depth research, the inventors have designed a polyolefin-based film. Through optimization of tortuosity of a pore structure in the polyolefin-based film and a maximum pore size of the pore structure in the polyolefin-based film, the polyolefin-based film has a uniform pore structure, thereby improving consistency of the base film, reducing performance deviation of the base film, and effectively ensuring air permeability of the base film. Additionally, the polyolefin-based film of this application is ultra-thin. For every 1 $\mu$m reduction in thickness, energy density of a battery cell can increase by approximately 0.7%. Therefore, with the thickness controlled to be below 7 $\mu$m, the energy density of the battery cell is improved. When the polyolefin-based film is used as a separator in a battery, electrical performance of the battery can be improved, including reducing battery internal resistance, direct current resistance, self-discharge rate, short-circuit rate, and the like.

The technical solutions described in the embodiments of this application are applicable to a polyolefin-based film, as well as to the preparation process of the polyolefin-based film, a separator using the polyolefin-based film, a secondary battery using the separator, and an electric apparatuses using the secondary battery.

According to a first aspect, some embodiments of this application provide a polyolefin-based film. The polyolefin-based film includes a pore structure, thickness of the polyolefin-based film is $\leq 7$ $\mu$m, and tortuosity of the pore structure is 7-10.

In the technical solution of the embodiments of this application, the polyolefin-based film has both ultra-thin thickness and uniform pore structure, which can effectively improve the overall performance of the base film. With the base film wound in the NCM811 system, the battery internal resistance, direct current resistance, and self-discharge rate can be effectively reduced, with the short-circuit rate and yield rate for mass production equivalent to those of the common 7 $\mu$m-thick polyolefin-based film.

In this application, the tortuosity of the pore structure of the polyolefin-based film is jointly determined by the air permeability of the base film, the thickness of the base film, the porosity of the base film, and the average pore size of the pore structure of the base film. The tortuosity of the pore structure of the polyolefin-based film can be calculated according to the following formula:

$$\tau = \sqrt{\frac{t_{gur}\,\varepsilon d}{5.18*10^{-3}*L}}$$

where $\tau$ represents the tortuosity of the pore structure, $t_{gur}$ represents the air permeability of the base film, $\varepsilon$ represents the porosity of the base film, d represents the average pore size of the pore structure, in cm, and L represents the thickness of the base film, in cm.

In some embodiments, according to the first aspect, a first example of the first aspect is proposed, where the tortuosity of the pore structure is 7.5-9.5. Further, the tortuosity of the pore structure is 7.5-9.

In some embodiments, according to the first aspect, a first example of the first aspect is proposed, where a maximum pore size of the pore structure is $\leq 45$ nm. Further, the maximum pore size of the pore structure is $\leq 40$ nm. Still further, the maximum pore size of the pore structure is 20 nm-40 nm.

In some embodiments, according to the first aspect, a first example of the first aspect is proposed, where the thickness of the polyolefin-based film is 2 $\mu$m-6.2 $\mu$m. Further, the thickness of the polyolefin-based film is 4 $\mu$m-6.2 $\mu$m.

In this design, the thickness of the polyolefin-based film and the tortuosity and maximum pore size of the pore structure are optimized, further improving the consistency of the polyolefin-based film, reducing the performance deviation of the base film, improving the air permeability of the base film, and increasing the energy density of the battery cell.

In some specific embodiments, the thickness of the polyolefin-based film may be 2 $\mu$m, 2.1 $\mu$m, 2.2 $\mu$m, 2.3 $\mu$m, 2.4 $\mu$m, 2.5 $\mu$m, 2.6 $\mu$m, 2.7 $\mu$m, 2.8 $\mu$m, 2.9 $\mu$m, 3.0 $\mu$m, 3.1 $\mu$m, 3.2 $\mu$m, 3.3 $\mu$m, 3.4 $\mu$m, 3.5 $\mu$m, 3.6 $\mu$m, 3.7 $\mu$m, 3.8 $\mu$m, 3.9 $\mu$m, 4 $\mu$m, 4.1 $\mu$m, 4.2 $\mu$m, 4.3 $\mu$m, 4.4 $\mu$m, 4.5 $\mu$m, 4.6 $\mu$m, 4.7 $\mu$m, 4.8 $\mu$m, 4.9 $\mu$m, 5.0 $\mu$m, 5.1 $\mu$m, 5.2 $\mu$m, 5.3 $\mu$m, 5.4 $\mu$m, 5.5 $\mu$m, 5.6 $\mu$m, 5.7 $\mu$m, 5.8 $\mu$m, 5.9 $\mu$m, 6.0 $\mu$m, 6.1 $\mu$m, 6.2 $\mu$m, 6.3 $\mu$m, 6.4 $\mu$m, 6.5 $\mu$m, 6.6 $\mu$m, 6.7 $\mu$m, 6.8 $\mu$m, 6.9 $\mu$m, or 7 $\mu$m. Optionally, the thickness of the polyolefin-based film may be 4 $\mu$m-5.0 $\mu$m, 5.0 $\mu$m-6.2 $\mu$m, or 4.5 $\mu$m-5.5 $\mu$m.

In some specific embodiments, the tortuosity of the pore structure may be 7.0, 7.1, 7.2, 7.3, 7.4, 7.5, 7.6, 7.7, 7.8, 7.9, 8.0, 8.1, 8.2, 8.3, 8.4, 8.5, 8.6, 8.7, 8.8, 8.9, 9.0, 9.1, 9.2, 9.3, 9.4, 9.5, 9.6, 9.7, 9.8, 9.9, or 10.0.

In some specific embodiments, the maximum pore size of the pore structure may be 45 nm, 44 nm, 43 nm, 42 nm, 41 nm, 40 nm, 39.9 nm, 39.8 nm, 39.7 nm, 39.6 nm, 39.5 nm, 39.4 nm, 39.3 nm, 39.2 nm, 39.1 nm, 39 nm, 38 nm, 35 nm, 30 nm, 25 nm, or 20 nm.

In some embodiments, according to the first aspect, a second example of the first aspect is proposed, where the polyolefin-based film includes polyolefin with a weight-average molecular weight Mw of more than 500,000.

The use of polyolefin with a weight-average molecular weight Mw of more than 500,000 as a raw material is beneficial for improving the uniformity of pore formation.

In this application, a single weight-average molecular weight should be understood as the uniquely determined weight-average molecular weight of the polyolefin.

In some specific embodiments, the weight-average molecular weight Mw of the polyolefin may be 500,000-1,500,000. An excessively large weight-average molecular weight results in processing difficulties, difficulty in controlling the pressure of the extruder, and poor thickness uniformity of the film surface. An excessively small weight-average molecular weight results in short molecular chains and small proportion of the crystalline region proportion after drawing, reducing the strength of the base film. For example, the weight-average molecular weight Mw of the polyolefin may be 500,000, 550,000, 600,000, 650,000, 700,000, 750,000, 800,000, 850,000, 900,000, 950,000, 1,000,000, 1,100,000, 1,200,000, 1,300,000, 1,400,000, or 1,500,000.

In some embodiments, according to the first aspect, a third example of the first aspect is proposed, where a polydispersity index Mw/Mn of the polyolefin is $\leq 3.5$.

In this design, the optimization of the polydispersity index of the polyolefin is beneficial for reducing the molecular weight distribution width of the polyolefin and improving the molecular weight consistency.

In this application, Mn is the number-average molecular weight of the polyolefin, Mw is the weight-average molecular weight of the polyolefin, and the polydispersity index is a value obtained by dividing the weight-average molecular weight by the number-average molecular weight, that is, weight-average molecular weight/number-average molecular weight (Mw/Mn), which can represent the uniformity of the molecular weight distribution.

In some specific embodiments, the polydispersity index Mw/Mn of the polyolefin may be 1, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, 3.1, 3.2, 3.3, 3.4, or 3.5. Optionally, the polydispersity index Mw/Mn of the polyolefin may be 1-3.5, 1-2, 2-3.5, or the like.

In some embodiments, according to the first aspect, a fourth example of the first aspect is proposed, where the polyolefin is polyethylene, polypropylene, or a mixture of polyethylene and polypropylene.

In this design, the optimization of polyolefin types is beneficial for further improving the consistency of the polyolefin-based film, increasing the strength and elongation rate of the base film, reducing the thermal shrinkage of the base film, and the like.

In some embodiments, according to the first aspect, a fifth example of the first aspect is proposed, where air permeability of the polyolefin-based film is $\leq$ 180s/100cc.

In this design, the optimization of the air permeability of the polyolefin-based film is beneficial for improving the air permeability of the separator.

In some specific embodiments, the air permeability of the polyolefin-based film may be 100-180s/100cc. For example, the air permeability of the polyolefin-based film may be 100s/100cc, 105s/100cc, 110s/100cc, 115s/100cc, 120s/100cc, 125s/100cc, 130s/100cc, 135s/100cc, 140s/100cc, 145s/100cc, 150s/100cc, 155s/100cc, 160s/100cc, 165s/100cc, 170s/100cc, 175s/100cc, or 180s/100cc. Optionally, the air permeability of the polyolefin-based film may be 140-170s/100cc.

In some embodiments, according to the first aspect, a sixth example of the first aspect is proposed, where a machine-direction (MD) elongation rate of the polyolefin-based film is $\geq$ 60%; optionally, the machine-direction elongation rate of the polyolefin-based film is $\geq$ 100%; and further optionally, the machine-direction elongation rate of the polyolefin-based film is 100%-120%; and a transverse-direction (TD) elongation rate of the polyolefin-based film is $\geq$ 100%; optionally, the transverse-direction elongation rate of the polyolefin-based film is $\geq$ 110%; and further optionally, the transverse-direction elongation rate of the polyolefin-based film is 110%-160%.

In this design, the increase in elongation rate indicates that the separator has good toughness. When metal particles (possibly from the operating environment, positive and negative electrode plates, separator, or the like) appear during the winding process, the separator can effectively wrap the particles, preventing the battery cell from being punctured and improving the manufacturability of the battery cell.

In some specific embodiments, the machine-direction elongation rate of the polyolefin-based film may be 60%-120%, for example, 60%, 65%, 70%, 73%, 75%, 80%, 82%, 85%, 88%, 89%, 90%, 93%, 95%, 96%, 97%, 98%, 99%, 100%, 101%, 104%, 105%, 109%, 110%, 112%, 113%, 114%, 115%, 116%, or 120%.

In some specific embodiments, the transverse-direction elongation rate of the polyolefin-based film may be 100%-160%, for example, 100%, 101%, 102%, 105%, 106%, 107%, 108%, 109%, 110%, 111%, 113%, 114%, 115%, 117%, 118%, 120%, 121%, 125%, 130%, 135%, 140%, 145%, 150%, 155%, or 160%.

In some embodiments, according to the first aspect, a seventh example of the first aspect is proposed, where the polyolefin-based film has a machine-direction thermal shrinkage of $\leq$ 4% and a transverse-direction thermal shrinkage of $\leq$ 4% at 115°C.

In this design, the reduction in the thermal shrinkage of the polyolefin-based film indicates that the separator has good thermal stability, thereby enhancing the safety performance of the battery cell.

In some specific embodiments, the machine-direction thermal shrinkage of the polyolefin-based film at 115°C may be 0%-3%, for example, 0%, 0.5%, 1%, 1.5%, 2%, 2.1%, 2.2%, 2.3%, 2.4%, 2.5%, 2.6%, 2.7%, 2.8%, 2.9%, or 3%. Optionally, the machine-direction thermal shrinkage of the polyolefin-based film at 115°C may be 2%-2.5%.

In some specific embodiments, the transverse-direction thermal shrinkage of the polyolefin-based film at 115°C may be 0%-3%, for example, 0%, 0.1%, 0.2%, 0.3%, 0.4%, 0.5%, 0.6%, 0.7%, 0.8%, 0.9%, 1%, 1.1%, 1.2%, 1.3%, 1.4%, 1.5%, 1.6%, 1.7%, 1.8%, 1.9%, 2%, 2.5%, or 3%. Optionally, the transverse-direction thermal shrinkage of the polyolefin-based film at 115°C may be 0.5%-2% or 0.9%-1.6%.

In some embodiments, according to the first aspect, an eighth example of the first aspect is proposed, where the polyolefin-based film meets at least one of the following conditions (1) to (4):

(1) the polyolefin-based film has a puncture strength of $\geq$ 270 gf;
(2) the polyolefin-based film has a machine-direction tensile strength of $\geq$ 2000 kgf/cm$^2$ and a transverse-direction tensile strength of $\geq$ 2000 kgf/cm$^2$;
(3) the polyolefin-based film has a porosity of 25%-40%; and
(4) the polyolefin-based film has a surface density of 2-5 g/m$^2$.

In this design, the polyethylene-based porous film has a high puncture strength, indicating that the separator has good tolerance performance, effectively ensuring the yield rate of the separator process. The optimization of the porosity of the polyethylene-based porous film is beneficial for ensuring pore size consistency and implementing effective ion conduction.

In some specific embodiments, the puncture strength of the polyolefin-based film may be 270 gf, 275 gf, 280 gf, 285 gf, 290 gf, 295 gf, 300 gf, 305 gf, 310 gf, 315 gf, 320 gf, 325 gf, 330 gf, 340 gf, 350 gf, or the like. Optionally, the puncture strength of the polyolefin-based film may be 270-350 gf.

In some specific embodiments, the machine-direction tensile strength of the polyolefin-based film may be 2000 kgf/cm$^2$, 2100 kgf/cm$^2$, 2200 kgf/cm$^2$, 2300 kgf/cm$^2$, 2400 kgf/cm$^2$, 2500 kgf/cm$^2$, 2600 kgf/cm$^2$, 2700 kgf/cm$^2$, 2800 kgf/cm$^2$, 2900 kgf/cm$^2$, or 3000 kgf/cm$^2$. Optionally, the machine-direction tensile strength of the polyolefin-based film may be 2400-2800 kgf/cm$^2$.

In some specific embodiments, the transverse-direction tensile strength of the polyolefin-based film may be 2000 kgf/cm$^2$, 2100 kgf/cm$^2$, 2200 kgf/cm$^2$, 2300 kgf/cm$^2$, 2400 kgf/cm$^2$, 2500 kgf/cm$^2$, 2600 kgf/cm$^2$, 2700 kgf/cm$^2$, 2800 kgf/cm$^2$, 2900 kgf/cm$^2$, or 3000 kgf/cm$^2$. Optionally, the transverse-direction tensile strength of the polyolefin-based film may be 2100-2600 kgf/cm$^2$.

In some specific embodiments, the porosity of the polyolefin-based film may be 25%, 26%, 27%, 28%, 29%, 30%, 31%, 32%, 33%, 34%, 35%, 36%, 37%, 38%, 39%, or 40%. Optionally, the porosity of the polyolefin-based film may be 30%-35%.

In some specific embodiments, the surface density of the polyolefin-based film may be 2 g/m$^2$, 2.1 g/m$^2$, 2.2 g/m$^2$, 2.3 g/m$^2$, 2.4 g/m$^2$, 2.5 g/m$^2$, 2.6 g/m$^2$, 2.7 g/m$^2$, 2.8 g/m$^2$, 2.9 g/m$^2$, 3.0 g/m$^2$, 3.1 g/m$^2$, 3.2 g/m$^2$, 3.3 g/m$^2$, 3.4 g/m$^2$, 3.5 g/m$^2$, 3.6 g/m$^2$, 3.7 g/m$^2$, 3.8 g/m$^2$, 3.9 g/m$^2$, 4 g/m$^2$, 4.5 g/m$^2$, or 5 g/m$^2$. Optionally, the surface density of the polyolefin-based film may be 2.5-4 g/m$^2$.

A second aspect of this application provides a preparation method of polyolefin-based film, including:

mixing polyolefin and a pore-forming agent and making a resulting mixture into a film;
subjecting the film to biaxial drawing;
removing the pore-forming agent from the biaxially drawn film to form pores; and
subjecting the film formed with the pores to draw-setting and heat-setting to obtain the polyolefin-based film; where the polyolefin-based film includes a pore structure, thickness of the polyolefin-based film is ≤ 7 μm, and tortuosity of the pore structure is 7-10.

In the technical solution of the embodiments of this application, the use of polyolefin as a raw material, coupled with biaxial drawing, can produce an ultra-thin polyolefin-based film with a pore structure tortuosity of 7-10 and a thickness of ≤ 7 μm.

Further, in the technical solution of this embodiment, the prepared polyolefin-based film has the same features and advantages as the polyolefin-based film mentioned above, and details are not repeated herein.

In some embodiments, according to the second aspect, a first example of the second aspect is proposed, where the polyolefin has a weight-average molecular weight Mw of more than 500,000. Further, the polyolefin-based film includes polyolefin with a weight-average molecular weight Mw of 500,000-1,500,000.

In some embodiments, according to the second aspect, a first example of the second aspect is proposed, where a proportion of the polyolefin in the mixture is 20wt%-30wt%.

In this design, the optimization of the proportion of the polyolefin in the mixture is beneficial for improving the thickness uniformity of the film surface, improving the pore size consistency of the base film, and meeting the high elongation rate requirement of the base film. If the proportion is too high (> 30wt%), the pressure curve of the extruder fluctuates greatly, the thickness uniformity of the film surface is poor, and the pore size consistency of the base film is poor. If the proportion is too low (< 20wt%), the content of the pore-forming agent is too high, the drawing ratio is limited, and the high elongation rate requirement cannot be met. Through optimization of the proportion of the polyolefin in the mixture, the uniformity of pore formation is improved while meeting the high elongation rate requirement.

In some specific embodiments, the proportion of the polyolefin in the mixture is 20wt%, 21wt%, 22wt%, 23wt%, 24wt%, 25wt%, 26wt%, 27wt%, 28wt%, 29wt%, or 30wt%.

In some embodiments, according to the second aspect, a second example of the second aspect is proposed, where the biaxial drawing includes machine-direction drawing and transverse-direction drawing, where a machine-direction drawing ratio is 5-15 times, a transverse-direction drawing ratio is 5-15 times, and the machine-direction drawing ratio and the transverse-direction drawing ratio are not both 5. Further, the machine-direction drawing ratio is 6-15 times, and the transverse-direction drawing ratio is 6-15 times.

In this design, through optimization of the machine-direction drawing ratio and the transverse-direction drawing ratio, the thickness of the polyolefin-based film can be further reduced, and the uniformity of pore formation can be improved.

In some specific embodiments, the machine-direction drawing ratio may be 5-12 times, for example, 5 times, 6 times, 7 times, 8 times, 8.1 times, 8.2 times, 8.3 times, 8.4 times, 8.5 times, 8.6 times, 8.7 times, 8.8 times, 8.9 times, 9 times, 9.1 times, 9.2 times, 9.3 times, 9.4 times, 9.5 times, 10 times, 11 times, or 12 times. Optionally, the machine-direction drawing ratio may be 8-9.5 times. A machine-direction drawing temperature may be 109°C-115°C.

In some specific embodiments, the transverse-direction drawing ratio may be 5-12 times, for example, 5 times, 6 times, 7 times, 8 times, 8.1 times, 8.2 times, 8.3 times, 8.4 times, 8.5 times, 8.6 times, 8.7 times, 8.8 times, 8.9 times, 9 times, 9.1 times, 9.2 times, 9.3 times, 9.4 times, 9.5 times, 9.6 times, 9.7 times, 9.8 times, 9.9 times, 10 times, 11 times, or 12 times. Optionally, the transverse-direction drawing ratio may be 8.5-10 times. A transverse-direction drawing temperature may be 113°C-119°C.

The pore-forming agent used is not particularly limited in this application, as long as it can fully dissolve the polyolefin. For example, the pore-forming agent may be but is not limited to one or more of white oil, liquid paraffin, mineral oil, soybean oil, phthalate ester, and aromatic ether. Optionally, the pore-forming agent is white oil. In some specific embodiments, the pore-forming agent is white oil, and the polyolefin with a single weight-average molecular weight is mixed with white oil to obtain a liquid mixture. The proportion of the polyolefin in the liquid mixture is the solid content of the polyolefin.

In some embodiments, according to the second aspect, a third example of the second aspect is proposed, where the thickness of the film may be more than 1 mm, optionally 1-5 mm, for example, 1 mm, 1.5 mm, 1.6 mm, 1.7 mm, 1.8 mm, 1.9 mm, 2 mm, 2.1 mm, 2.2 mm, 2.3 mm, 2.4 mm, 2.5 mm, 3 mm, 4 mm, or 5 mm.

In some embodiments, according to the second aspect, a fourth example of the second aspect is proposed, where the biaxial drawing includes: first performing machine-direction drawing, and then performing transverse-direction drawing; or first performing transverse-direction drawing, and then performing machine-direction drawing; or performing machine-direction drawing and transverse-direction drawing simultaneously.

In some embodiments, according to the second aspect, a fifth example of the second aspect is proposed, where the removing the pore-forming agent includes: extracting the pore-forming agent from the film using an extractant. The type of the extractant can be selected according to the type of pore-forming agent. The extractant is mainly used to dissolve the pore-forming agent to form pores in the material. Optionally, the extractant is dichloromethane.

In some embodiments, according to the second aspect, a sixth example of the second aspect is proposed, where the draw-setting includes: performing small-ratio transverse-direction drawing on the film. The drawing ratio may be 1-3 times. A drawing temperature may be 130°C-133°C.

In some embodiments, according to the second aspect, a seventh example of the second aspect is proposed, where the heat-setting includes: performing heat-setting on the film. A heating temperature is ≥133°C, optionally 133°C-135°C. A heating time is ≥ 20s, optionally 20s-60s, for example, 28s-40s or 30s-40s.

A third aspect of this application provides a separator including the polyolefin-based film according to the first aspect of this application or a polyolefin-based film obtained using the preparation method according to the second aspect of this application.

In the technical solution of the embodiments of this application, since the polyolefin-based film according to the first aspect of this application or the polyolefin-based film obtained using the preparation method according to the second aspect of this application is used, the separator of this application has the advantages of being ultra-thin, having a uniform pore structure, and so on. Additionally, with a coating provided on the surface of the polyolefin-based film, the electrical performance and safety performance of the battery cell can be improved.

In some embodiments, according to the third aspect, a first example of the third aspect is proposed, where the separator further includes a coating provided on at least one surface of the polyolefin-based film.

In some embodiments, according to the third aspect, a first example of the third aspect is proposed, where the coating includes a filler. The filler is selected from at least one of inorganic particles, organic particles, and organic-inorganic hybrid particles.

In some embodiments, optionally, a decomposition temperature of the filler is above 200°C, so that the filler can have good thermal stability and is not easily decomposed, thereby further improving the heat resistance of the separator.

In some embodiments, optionally, the inorganic particles include at least one of inorganic particles with a dielectric constant of more than 5, inorganic particles with ion conductivity but not storing ions, and inorganic particles capable of electrochemical reactions.

Optionally, the inorganic particles with a dielectric constant of more than 5 include at least one of boehmite, alumina, zinc oxide, silica, titania, zirconia, barium oxide, calcium oxide, magnesium oxide, nickel oxide, tin oxide, cerium oxide, yttrium oxide, hafnium oxide, aluminum hydroxide, magnesium hydroxide, silicon carbide, boron carbide, aluminum nitride, silicon nitride, boron nitride, magnesium fluoride, calcium fluoride, barium fluoride, barium sulfate, magnesium aluminum silicate, lithium magnesium silicate, sodium magnesium silicate, bentonite, montmorillonite, zirconium titanate, barium titanate, $Pb(Zr,Ti)O_3$ (abbreviated as PZT), $Pb_1\text{-}mLa_mZr_1\text{-}nTi_nO_3$ (abbreviated as PLZT, where $0<m<1$, and $0<n<1$), $Pb(Mg_3Nb_{2/3})O_3\text{-}PbTiO_3$ (abbreviated as PMN-PT), and their respective modified inorganic particles. Optionally, a modification method of the inorganic particles may be chemical modification and/or physical modification. The chemical modification method includes coupling agent modification (for example, using a silane coupling agent, a titanate coupling agent, or the like), surfactant modification, polymer graft modification, and the like. The physical modification method can be mechanical force dispersion, ultrasonic dispersion, high-energy treatment, and the like. Through modification treatment, the agglomeration of inorganic particles can be reduced. Additionally, the inorganic particles are modified using a coupling agent having specific functional groups, a surface active material, or a polymer, the wettability of the coating in the electrolyte and the adhesion of the coating can be improved.

Optionally, the inorganic particles with ion conductivity but not storing ions include at least one of $Li_3PO_4$, lithium

titanium phosphate $Li_{x1}Ti_{y1}(PO_4)_3$, lithium aluminum titanium phosphate $Li_{x2}Al_{y2}Ti_{z1}(PO_4)_3$, $(LiAlTiP)_{x3}O_{y3}$ type glass, lithium lanthanum titanate $Li_{x4}La_{y4}TiO_3$, lithium germanium thio-phosphate $Li_{x5}Ge_{y5}P_{z2}S_w$, lithium nitride $Li_{x6}N_{y6}$, $SiS_2$ type glass $Li_{x7}Si_{y7}S_{z3}$, and $P_2S_5$ type glass $i_{x8}P_{y8}S_{z4}$, where $0<x1<2$, $0<y1<3$, $0<x2<2$, $0<y2<1$, $0<z1<3$, $0<x3<4$, $0<y3<13$, $0<x4<2$, $0<y4<3$, $0<x5<4$, $0<y5<1$, $0<z2<1$, $0<w<5$, $0<x6<4$, $0<y6<2$, $0<x7<3$, $0<y7<2$, $0<z3<4$, $0<x8<3$, $0<y8<3$, and $0<z4<7$. This can further enhance the ion transport characteristics of the separator.

Optionally, the inorganic particles capable of electrochemical reactions include at least one of lithium-containing transition metal oxide, lithium-containing phosphate, carbon-based material, silicon-based material, tin-based material, and lithium titanium compound.

The organic particles have good thermal stability and are not easily decomposed, thereby improving the heat resistance of the separator. Additionally, when the internal temperature of the secondary battery reaches the melting point of the organic particles due to thermal runaway, the organic particles can also melt and are sucked into the micropores of the porous substrate due to capillary action to play a role in closing the pores and breaking the paths, thereby helping to ensure high safety performance for the secondary battery.

In some embodiments, the organic particles include but are not limited to at least one of polyethylene particles, polypropylene particles, polystyrene particles, cellulose, cellulose modifier (for example, carboxymethyl cellulose), melamine resin particles, phenolic resin particles, polyester particles (for example, polyethylene terephthalate, polyethylene naphthalate, and polybutylene terephthalate), silicone resin particles, polyimide particles, polyamideimide particles, polyaramid particles, polyphenylene sulfide particles, polysulfone particles, polyethersulfone particles, polyetheretherketone particles, polyaryletherketone particles, and copolymer of butyl acrylate and ethyl methacrylate (for example, cross-linked polymer of butyl acrylate and ethyl methacrylate).

In some embodiments, optionally, a glass transition temperature of the organic particles may be above 130°C. Thus, when the internal temperature of the secondary battery reaches 130°C, the organic particles do not change from a glassy state to a viscous state, thereby ensuring that the separator does not shrink drastically. More optionally, the organic particles include but are not limited to at least one of melamine-formaldehyde resin particles, phenolic resin particles, polyester particles, organosilicon resin particles, polyimide particles, polyamideimide particles, polyaramide particles, polyphenylene sulfide particles, polysulfone particles, polyethersulfone particles, polyether-ether-ketone particles, and polyaryl-ether-ketone particles.

Optionally, the coating may further include nanocellulose. Nanocellulose is a general term for cellulose with a size in nanoscale (for example, within 100 nm) in any dimension, which has both the characteristics of cellulose and the characteristics of nanoparticles. Nanocellulose can be a polymer nanomaterial extracted from natural materials such as wood and cotton by one or more of chemical, physical, biological, and other means. Nanocellulose has the advantages of extensive sources, low cost, biodegradability, high modulus, high specific surface area, and so on.

In some embodiments, the nanocellulose may include at least one of cellulose nanofibrils (Cellulose nanofibrils, CNF, also known as nanofibrillated cellulose or microfibrillated cellulose), cellulose nanocrystals (Cellulose nanocrystals, CNC, also known as cellulose nanocrystals or nanocrystalline cellulose), and bacterial nanocellulose (Bacterial nanocellulose, BNC, also known as bacterial cellulose or microbial cellulose).

In some embodiments, the nanocellulose may include at least one of unmodified nanocellulose (also known as hydroxyl nanocellulose) and modified nanocellulose, optionally modified nanocellulose. The nanocellulose may include a modified group. The modified group may include at least one of an amine group, a carboxylic acid group, an aldehyde group, a sulfonic acid group, a boric acid group, and a phosphoric acid group, further optionally at least one of a sulfonic acid group, a boric acid group, and a phosphoric acid group.

In some embodiments, the organic-inorganic hybrid particles may be selected from a metal-organic framework material, such as MOF.

In some embodiments, the coating may further include other organic compounds, for example, may include a polymer for improving heat resistance, a dispersant, a wetting agent, an adhesive, and the like. The other organic compounds are not limited to any particular type in this application, and any commonly known material good for performance improvement can be used.

In some specific embodiments, thickness of the coating is $\leq 5$ $\mu$m.

In some specific embodiments, the preparation method of the separator includes the following steps: (1) providing a polyolefin-based film; (2) providing a coating slurry, where a filler and a solvent is mixed at a predetermined ratio to prepare the coating slurry; (3) applying the coating slurry in step (2) onto at least one side of the polyolefin-based film in step (1) to form a coating, followed by drying, to obtain the separator, where the polyolefin-based film includes a pore structure, thickness of the polyolefin-based film is $\leq 7$ $\mu$m, tortuosity of the pore structure is 7.5-9.5, and a maximum pore size of the pore structure is $\leq 45$ nm.

In some specific embodiments, the separator further includes an adhesive layer. The adhesive layer is provided on at least a part of surface of the coating. The adhesive layer includes a granular adhesive, and optionally, the granular adhesive includes at least one of homopolymer or copolymer of acrylate monomers, homopolymer or copolymer of acrylic monomers, and homopolymer or copolymer of fluoroolefin monomers.

A fourth aspect of this application provides a secondary battery including the separator according to the third aspect of this application.

Since the polyolefin-based film according to the first aspect of this application or a polyolefin-based film obtained using the preparation method according to the second aspect of this application is used, the secondary battery of this application has improved energy density and electrical performance.

Generally, a secondary battery may include a positive electrode plate, a negative electrode plate, a separator, and an electrolyte. In a charge and discharge process of the battery, active ions intercalate and deintercalate between the positive electrode plate and the negative electrode plate. The separator is disposed between the positive electrode plate and the negative electrode plate to provide separation. The electrolyte conducts ions between the positive electrode plate and the negative electrode plate.

[Negative electrode plate]

The negative electrode plate typically includes a negative electrode current collector and a negative electrode film layer provided on the negative electrode current collector. The negative electrode film layer includes a negative electrode active material.

The negative electrode current collector may be a common metal foil or a composite current collector (for example, the composite current collector may be formed by providing a metal material on a polymer matrix). For example, the negative electrode current collector may be a copper foil.

The negative electrode active material may be a well-known negative electrode active material used for batteries in the art. For example, the negative electrode active material may include at least one of the following materials: artificial graphite, natural graphite, soft carbon, hard carbon, a silicon-based material, a tin-based material, lithium titanate, and the like. The silicon-based material may be at least one selected from elemental silicon, silicon-oxygen compound, silicon-carbon composite, silicon-nitrogen composite, and silicon alloy. The tin-based material may be at least one selected from elemental tin, tin-oxygen compound, and tin alloy. However, this application is not limited to these materials, and may alternatively use other conventional materials that can be used as negative electrode active materials for batteries instead. One type of these negative electrode active materials may be used alone, or two or more types may be used in combination.

The negative electrode film layer generally further optionally includes a binder, a conductive agent, or other optional adjuvants.

For example, the conductive agent may be one or more of superconducting carbon, acetylene black, carbon black, Ketjen black, carbon dots, carbon nanotubes, conductive carbon black (Super P), graphene, and carbon nanofibers.

For example, the binder may be one or more of styrene-butadiene rubber (SBR), water-based acrylic resin (water-based acrylic resin), polyvinylidene fluoride (PVDF), polytetrafluoroethylene (PTFE), ethylene vinyl acetate (EVA), polyvinyl alcohol (PVA), and polyvinyl butyral (PVB).

For example, the other optional adjuvants may be, for example, a thickening and dispersing agent (such as sodium carboxymethyl cellulose CMC-Na) and a PTC thermistor material.

[Positive electrode plate]

The positive electrode plate typically includes a positive electrode current collector and a positive electrode film layer provided on the positive electrode current collector. The positive electrode film layer includes a positive electrode active material.

The positive electrode current collector may be a common metal foil or a composite current collector (the composite current collector may be formed by providing a metal material on a polymer matrix). For example, the positive electrode current collector may be an aluminum foil.

The positive electrode active material is not limited to a particular type. The active materials known in the art that can be used for positive electrodes of secondary batteries can be used, and persons skilled in the art can make selection based on an actual need.

For example, the positive electrode active material may include but is not limited to one or more of lithium transition metal oxide, olivine-structured lithium-containing phosphate, and modified compounds thereof. Examples of the lithium transition metal oxide may include but are not limited to one or more of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and modified compounds thereof. Examples of the olivine-structured lithium-containing phosphate may include but are not limited to one or more of lithium iron phosphate, composite material of lithium iron phosphate and carbon, lithium manganese phosphate, composite material of lithium manganese phosphate and carbon, lithium manganese iron phosphate, composite material of lithium manganese iron phosphate and carbon, and modified compounds thereof. These materials are all commercially available.

In some embodiments, the modified compounds of the foregoing materials may be obtained through doping modification and/or surface coating modification of the materials.

The positive electrode film layer generally further optionally includes a binder, a conductive agent, or other optional adjuvants.

For example, the conductive agent may be one or more of superconducting carbon, acetylene black, carbon black, Ketjen black, carbon dots, carbon nanotubes, conductive carbon black (Super P), graphene, and carbon nanofibers.

For example, the binder may be one or more of styrene-butadiene rubber (SBR), water-based acrylic resin (water-based acrylic resin), polyvinylidene fluoride (PVDF), polytetrafluoroethylene (PTFE), ethylene-vinyl acetate copolymer (EVA), polyacrylic acid (PAA), carboxymethyl cellulose (CMC), polyvinyl alcohol (PVA), and polyvinyl butyral (PVB).

[Electrolyte]

The electrolyte conducts ions between the positive electrode and the negative electrode. The electrolyte may include an electrolytic salt and a solvent.

For example, the electrolytic salt may be selected from one or more of lithium hexafluorophosphate (LiPF$_6$), lithium tetrafluoroborate (LiBF$_4$), lithium perchlorate (LiClO$_4$), lithium hexafluoroarsenate (LiAsF$_6$), lithium bis(fluorosulfonyl)imide (LiFSI), lithium bis-trifluoromethanesulfonimidetrifluoromethanesulfon imide (LiTFSI), lithium trifluoromethanesulfonat (LiTFS), lithium difluorooxalatoborate (LiDFOB), lithium bisoxalatoborate (LiBOB), lithium difluorophosphate (LiPO$_2$F$_2$), lithium difluorophosphate (LiDFOP), and lithium tetrafluoro oxalate phosphate (LiTFOP).

For example, the solvent may be selected from one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-gamma-butyrolactone (GBL), sulfolane (SF), methyl sulfonyl methane (MSM), ethyl methanesulfonate (EMS), and diethyl sulfone (ESE).

In some embodiments, the electrolyte further includes an additive. For example, the additive may include a negative electrode film-forming additive, or may include a positive electrode film-forming additive, or may include an additive capable of improving some performance of the battery, for example, an additive for improving overcharge performance of the battery, an additive for improving high-temperature performance of the battery, or an additive for improving low-temperature performance of the battery.

In some embodiments, the positive electrode plate, the negative electrode plate, and the separator may be made into an electrode assembly through winding or lamination.

In some embodiments, the battery cell may include an outer package. The outer package may be used for packaging the foregoing electrode assembly and electrolyte.

In some embodiments, the outer package of the battery cell may be a hard shell, for example, a hard plastic shell, an aluminum shell, or a steel shell. The outer package of the battery cell may alternatively be a soft pack, such as a soft pouch. A material of the soft pack may be plastic, which, for example, may be polypropylene, polybutylene terephthalate, polybutylene succinate, and the like.

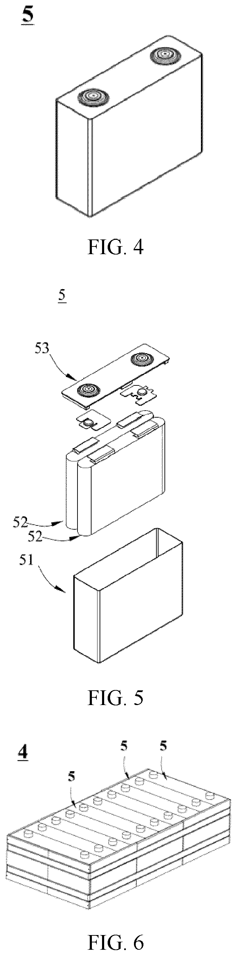

This application does not impose special limitations on the shape of the battery cell, and the battery cell may be cylindrical, rectangular, or of any other shapes. For example, FIG. 4 shows a rectangular battery cell 5 as an example.

In some embodiments, referring to FIG. 5, the outer package may include a housing 51 and a cover plate 53. The housing 51 may include a base plate and side plates connected to the base plate, and the base plate and the side plates enclose an accommodating cavity. The housing 51 has an opening communicating with the accommodating cavity, and the cover plate 53 can cover the opening to close the accommodating cavity. The positive electrode plate, the negative electrode plate, and the separator may be made into an electrode assembly 52 through winding or lamination. The electrode assembly 52 is packaged in the accommodating cavity. The electrolyte infiltrates the electrode assembly 52. The battery cell 5 may include one or more electrode assemblies 52, and persons skilled in the art can make choices according to actual requirements.

In some embodiments, the battery cell may be assembled into a battery module, and the battery module may include one or more battery cells. The specific quantity may be chosen by persons skilled in the art according to use and capacity of the battery module.

FIG. 6 shows a battery module 4 as an example. Referring to FIG. 6, in the battery module 4, a plurality of battery cells 5 may be sequentially arranged in a length direction of the battery module 4. Certainly, the battery cells may alternatively be arranged in any other manners. Further, the plurality of battery cells 5 may be fastened using fasteners.

Optionally, the battery module 4 may further include a shell with an accommodating space, and the plurality of battery cells 5 are accommodated in the accommodating space.

In some embodiments, the battery module may be further assembled into a battery pack, and the battery pack may include one or more battery modules. The specific quantity may be chosen by persons skilled in the art according to use and capacity of the battery pack.

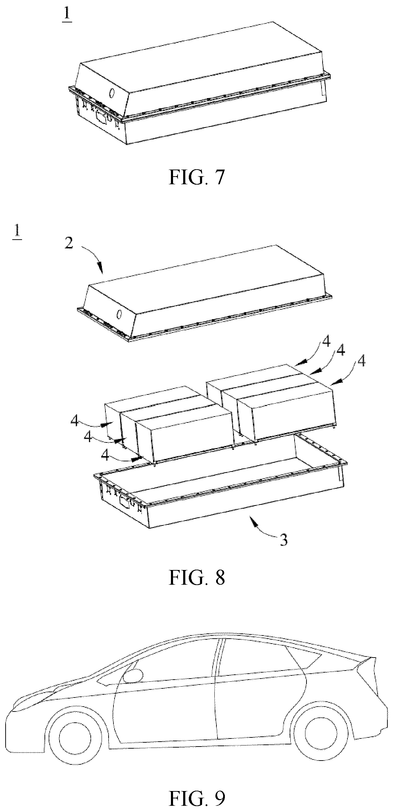

FIG. 7 and FIG. 8 show a battery pack 1 as an example. Referring to FIG. 7 and FIG. 8, the battery pack 1 may include a battery box and a plurality of battery modules 4 arranged in the battery box. The battery box includes an upper box body 2 and a lower box body 3. The upper box body 2 can be engaged with the lower box body 3 to form an enclosed space for accommodating the battery modules 4. The plurality of battery modules 4 may be arranged in the battery box in any manner.

In addition, this application further provides an electric apparatus. The electric apparatus includes the secondary battery provided in this application, and the secondary battery includes at least one of a battery cell, a battery module, and a battery pack. The secondary battery may be used as a power source of the electric apparatus or an energy storage unit of the electric apparatus. The electric apparatus may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, or the like, but is not limited thereto.

The battery cell, the battery module, or the battery pack may be selected for the electric apparatus based on requirements for using the electric apparatus.

FIG. 9 shows an electric apparatus as an example. This electric apparatus is a battery electric vehicle, a hybrid electric vehicle, a plug-in hybrid electric vehicle, or the like. To satisfy requirements of the electric apparatus for high power and high energy density of the power source, a battery pack or a battery module may be used.

In another example, the apparatus may be a mobile phone, a tablet computer, a notebook computer, or the like. The apparatus generally needs to be light and thin, and the battery cell may be used as a power source.

This application is further described with reference to examples. It should be understood that these examples are only for illustrating this invention and are not intended to limit the scope of this invention.

## Preparation of polyethylene-based porous film

### Example 1

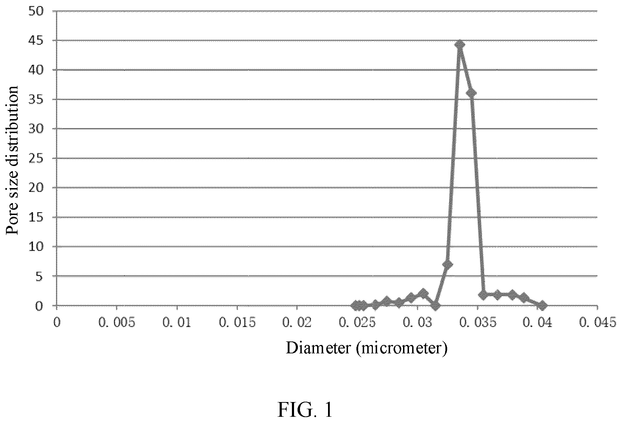

First, polyethylene with a weight-average molecular weight of $8.0 \times 10^5$ and Mw/Mn=3.5 was selected and blended with white oil, where the solid content of polyethylene was 25wt%. Then, the mixture was heated and melted in an extruder, followed by cooling and casting to form a 2 mm cast film. The cast film was subjected to machine-direction and transverse-direction drawing, where the machine-direction drawing ratio was 8.2 times, the machine-direction drawing temperature was 110°C, the transverse-direction drawing ratio was 8.7 times, and the transverse-direction drawing temperature was 115°C. After heat preservation, a film with an area increased by 71 times was obtained. Dichloromethane was used to extract the white oil from the film to form pores. The dried microporous film was subjected to small-ratio transverse-direction drawing, with a small-ratio transverse-direction drawing ratio of 2 times and a drawing temperature of 132°C, followed by heat-setting at 133°C for 25 seconds to obtain a polyethylene-based porous film with a thickness of 5.1 μm and a crystallinity of 78.7%. The pore size distribution diagram of the polyolefin-based film is shown in FIG. 1.

### Example 2

First, polyethylene with a weight-average molecular weight of $7.0 \times 10^5$ and Mw/Mn=3.5 was selected and blended with white oil, where the solid content of polyethylene was 25wt%. Then, the mixture was heated and melted in an extruder, followed by cooling and casting to form a 1.5 mm cast film. The cast film was subjected to machine-direction and transverse-direction drawing, where the machine-direction drawing ratio was 9.2 times, the machine-direction drawing temperature was 110°C, the transverse-direction drawing ratio was 9.7 times, and the transverse-direction drawing temperature was 115°C. After heat preservation, a film with an area increased by 71 times was obtained. Dichloromethane was used to extract the white oil from the film to form pores. The dried microporous film was subjected to small-ratio transverse-direction drawing, with a small-ratio transverse-direction drawing ratio of 2 times and a drawing temperature of 132°C, followed by heat-setting at 133°C for 25 seconds to obtain a polyethylene-based porous film with a thickness of 4.0 μm and a crystallinity of 79.6%.

### Example 3

First, polyethylene with a weight-average molecular weight of $8.0 \times 10^5$ and Mw/Mn=3.0 was selected and blended with white oil, where the solid content of polyethylene was 25wt%. Then, the mixture was heated and melted in an extruder, followed by cooling and casting to form a 2.1 mm cast film. The cast film was subjected to machine-direction and transverse-direction drawing, where the machine-direction drawing ratio was 8.2 times, the machine-direction drawing temperature was 110°C, the transverse-direction drawing ratio was 8.7 times, and the transverse-direction drawing temperature was 115°C. After heat preservation, a film with an area increased by 71 times was obtained. Dichloromethane was used to extract the white oil from the film to form pores. The dried microporous film was subjected to small-ratio transverse-direction drawing, with a small-ratio transverse-direction drawing ratio of 2 times and a drawing temperature of 132°C, followed by heat-setting at 133°C for 25 seconds to obtain a polyethylene-based porous film with a thickness of 6.2 μm and a crystallinity of 79.3%.

**Examples 4 to 14**

The films were prepared according to the method described in Example 1, except that the parameters listed in Table 1 were different from those in Example 1.

**Comparative Example 1**

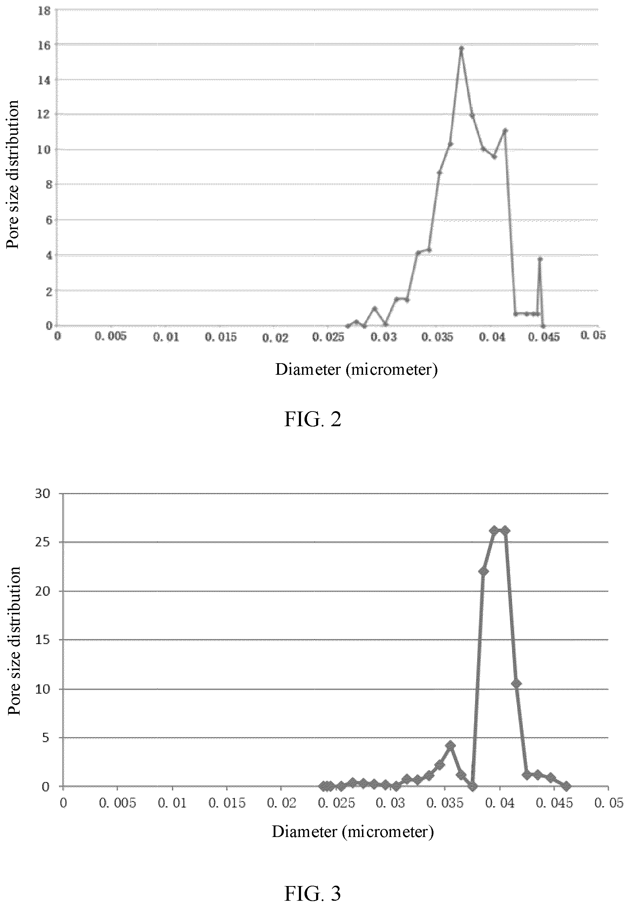

First, polyethylene with a weight-average molecular weight of $4.0 \times 10^5$ and Mw/Mn=3.5 was selected and blended with white oil, where the solid content of polyethylene was 25wt%. Then, the mixture was heated and melted in an extruder, followed by cooling and casting to form a 2 mm cast film. The cast film was subjected to machine-direction and transverse-direction drawing, where the machine-direction drawing ratio was 8.2 times, the machine-direction drawing temperature was 110°C, the transverse-direction drawing ratio was 8.7 times, and the transverse-direction drawing temperature was 115°C. After heat preservation, a film with an area increased by 71 times was obtained. Dichloromethane was used to extract the white oil from the film to form pores. The dried microporous film was subjected to small-ratio transverse-direction drawing, with a small-ratio transverse-direction drawing ratio of 2 times and a drawing temperature of 132°C, followed by heat-setting at 133°C for 25 seconds to obtain a polyethylene-based porous film with a thickness of 5.2 μm and a crystallinity of 78.7%. The pore size distribution of the polyolefin-based film was tested using the method of Example 1. The obtained pore size distribution diagram is shown in FIG. 2.

**Comparative Example 2**

First, polyethylene with a weight-average molecular weight of $8.0 \times 10^5$ and Mw/Mn=4.0 was selected and blended with white oil, where the solid content of polyethylene was 25wt%. Then, the mixture was heated and melted in an extruder, followed by cooling and casting to form a 2 mm cast film. The cast film was subjected to machine-direction and transverse-direction drawing, where the machine-direction drawing ratio was 8.2 times, the machine-direction drawing temperature was 110°C, the transverse-direction drawing ratio was 8.7 times, and the transverse-direction drawing temperature was 115°C. After heat preservation, a film with an area increased by 71 times was obtained. Dichloromethane was used to extract the white oil from the film to form pores. The dried microporous film was subjected to small-ratio transverse-direction drawing, with a small-ratio transverse-direction drawing ratio of 2 times and a drawing temperature of 132°C, followed by heat-setting at 133°C for 25 seconds to obtain a polyethylene-based porous film with a thickness of 5.2 μm and a crystallinity of 78.7%. The pore size distribution of the polyolefin-based film was tested using the method of Example 1. The obtained pore size distribution diagram is shown in FIG. 3.

**Comparative Example 3**

First, polyethylene with a weight-average molecular weight of $8.0 \times 10^5$ and Mw/Mn=3.5 was selected and blended with white oil, where the solid content of polyethylene was 25wt%. Then, the mixture was heated and melted in an extruder, followed by cooling and casting to form a 2 mm cast film. The cast film was subjected to machine-direction and transverse-direction drawing, where the machine-direction drawing ratio was 5.0 times, the machine-direction drawing temperature was 110°C, the transverse-direction drawing ratio was 5.0 times, and the transverse-direction drawing temperature was 115°C. After heat preservation, a film with an area increased by 25 times was obtained. Dichloromethane was used to extract the white oil from the film to form pores. The dried microporous film was subjected to small-ratio transverse-direction drawing, with a small-ratio transverse-direction drawing ratio of 2 times and a drawing temperature of 132°C, followed by heat-setting at 133°C for 25 seconds to obtain a polyethylene-based porous film with a thickness of 5.2 μm and a crystallinity of 78.7%.

**Comparative Example 4**

First, polyethylene with a weight-average molecular weight of $8.0 \times 10^5$ and Mw/Mn=3.5 was selected and blended with white oil, where the solid content of polyethylene was 10wt%. Then, the mixture was heated and melted in an extruder, followed by cooling and casting to form a 2 mm cast film. The cast film was subjected to machine-direction and transverse-direction drawing, where the machine-direction drawing ratio was 8.2 times, the machine-direction drawing temperature was 110°C, the transverse-direction drawing ratio was 8.7 times, and the transverse-direction drawing temperature was 115°C. After heat preservation, a film with an area increased by 71 times was obtained. Dichloromethane was used to extract the white oil from the film to form pores. The dried microporous film was subjected to small-ratio transverse-direction drawing, with a small-ratio transverse-direction drawing ratio of 2 times and a drawing temperature of 132°C, followed by heat-setting at 133°C for 25 seconds to obtain a polyethylene-based porous film with a thickness of 5.2 $\mu$m and a crystallinity of 78.7%.

**Comparative Examples 5 and 6**

The films were prepared according to the method described in Example 1, except that the parameters listed in Table 1 were different from those in Example 1.

**Table 1**

| No. | Polyolefin | | | Solid content of polyolefin (wt%) | Drawing | |
| --- | --- | --- | --- | --- | --- | --- |
| | Type of polyolefin | Mw | Mw/Mn | | Machine-direction drawing ratio (times) | Transverse-direction drawing ratio (times) |
| Example 1 | Polyethylene | $8.0 \times 10^5$ | 3.5 | 25 | 8.2 | 8.7 |
| Example 2 | Polyethylene | $7.0 \times 10^5$ | 3.5 | 25 | 9.2 | 9.7 |
| Example 3 | Polyethylene | $8.0 \times 10^5$ | 3.0 | 25 | 8.2 | 8.7 |
| Example 4 | Polyethylene | $5.0 \times 10^5$ | 3.5 | 25 | 8.2 | 8.7 |
| Example 5 | Polyethylene | $10.0 \times 10^5$ | 3.5 | 25 | 8.2 | 8.7 |
| Example 6 | Polyethylene | $8.0 \times 10^5$ | 2.5 | 25 | 8.2 | 8.7 |
| Example 7 | Polyethylene | $8.0 \times 10^5$ | 2 | 25 | 8.2 | 8.7 |
| Example 8 | Polyethylene | $8.0 \times 10^5$ | 3.5 | 20 | 8.2 | 8.7 |
| Example 9 | Polyethylene | $8.0 \times 10^5$ | 3.5 | 30 | 8.2 | 8.7 |
| Example 10 | Polyethylene | $8.0 \times 10^5$ | 3.5 | 25 | 5 | 15 |
| Example 11 | Polyethylene | $8.0 \times 10^5$ | 3.5 | 25 | 15 | 5 |
| Example 12 | Polyethylene | $12.0 \times 10^5$ | 3.5 | 25 | 8.2 | 8.7 |
| Example 13 | Polyethylene | $12.0 \times 10^5$ | 3.5 | 25 | 8.8 | 8.9 |
| Example 14 | Polypropylene | $10.0 \times 10^5$ | 3.5 | 25 | 8.2 | 8.7 |
| Example 15 | Polyethylene | $12.0 \times 10^5$ | 3.5 | 26 | 8.0 | 8.5 |
| Example 16 | Polyethylene | $12.0 \times 10^5$ | 3.5 | 25 | 7.8 | 8.3 |
| Example 17 | Polyethylene | $12.0 \times 10^5$ | 3.5 | 26 | 7.2 | 8.1 |
| Example 18 | Polyethylene | $12.0 \times 10^5$ | 3.5 | 26 | 12 | 12 |
| Example 19 | Polyethylene | $12.0 \times 10^5$ | 3.5 | 25 | 7.2 | 7.3 |
| Example 20 | Polyethylene | $12.0 \times 10^5$ | 3.5 | 25 | 7.0 | 7.1 |
| Example 21 | Polyethylene | $5.0 \times 10^5$ | 3.5 | 30 | 8.2 | 8.7 |
| Example 22 | Polyethylene | $15.0 \times 10^5$ | 3.5 | 30 | 15 | 15 |
| Example 23 | Polyethylene | $15.0 \times 10^5$ | 3.5 | 25 | 10 | 10 |
| Comparative Example 1 | Polyethylene | $4.0 \times 10^5$ | 3.5 | 25 | 8.2 | 8.7 |
| Comparative Example 2 | Polyethylene | $8.0 \times 10^5$ | **4.0** | 25 | 8.2 | 8.7 |

(continued)

| No. | Polyolefin | | | Solid content of polyolefin (wt%) | Drawing | |
|---|---|---|---|---|---|---|
| | Type of polyolefin | Mw | Mw/Mn | | Machine-direction drawing ratio (times) | Transverse-direction drawing ratio (times) |
| Comparative Example 3 | Polyethylene | $8.0\times10^5$ | 3.5 | 25 | **5.0** | **5.0** |
| Comparative Example 4 | Polyethylene | $8.0\times10^5$ | 3.5 | **10** | 8.2 | 8.7 |
| Comparative Example 5 | Polyethylene | $8.0\times10^5$ | 3.5 | **40** | 8.2 | 8.7 |
| Comparative Example 6 | Polyethylene | $8.0\times10^5$ | 3.5 | 25 | **17** | **17** |

**Parameter tests of polyethylene-based film**

1. Thickness test of the polyolefin-based film: The measurement platform and the measurement head were cleaned. Cleanness of the measurement platform and measurement head needed to be ensured. A micrometer was used for testing. When the data became stable, the data was recorded into Tables 2 to 4.

2. Tests on the average pore size and maximum pore size of the pore structure of the polyolefin-based film: Direct measurement was performed using equipment such as the capillary flow porometer or mercury porosimeter from PMI. (1) The pores of the base film under test were fully wetted and filled with liquid, to create a positive pressure inside the pores due to capillary phenomena. (2) The base film was placed into a sealed chamber and pressurized with gas to squeeze the liquid out of the capillary pores. (3) Based on the relative relationship between the pressure applied when the liquid in a single channel is fully squeezed out of the capillary channel and the pore diameter, the average pore size and maximum pore size of the pore structure of the polyolefin-based film were obtained according to the Laplace equation. The test results are shown in Tables 2 to 4 below.

3. Air permeability test: The base film sample was cut, where the sample size must be larger than 40 mm * 40 mm. The sample was placed on the sample testing platform, with the sample covering the entire sample region. The knob was tightened, and the measurement was selected, with the film covering the testing platform. The RESET button was pressed (at that time, the screen displayed "TIMER SEEKING STARTING MARK"), and then the plunger was released to start the test. After the measurement was completed, the plugcock was slowly unscrewed until the plunger dropped to the lowest position. The sample was taken out, and the plunger was slowly lifted for the next measurement. The test results are shown in Tables 2 to 4 below.

4. Tensile strength test: Sample punching: The base film was punched into strips with a width of 15 mm and a length of greater than 40 mm. Then the tensile testing machine clamps were set to an initial clamp distance of 40 mm and a speed of 50 mm/min. The sample under test was placed in the middle of the clamps, with the upper and lower ends clamped by the clamps. The tensile curve was recorded. Five parallel samples were tested in each group. The test results are shown in Tables 2 to 4 below.

5. Elongation rate test: The base film was punched into strips with a width of 15 mm and a length of greater than 40 mm. Then the tensile testing machine clamps were set to an initial clamp distance of 40 mm and a speed of 50 mm/min. The sample under test was placed in the middle of the clamps. The length of the drawn base film was recorded. Elongation rate = length of the drawn base film/40 mm * 100%. The test results are shown in Tables 2 to 4 below.

6. Thermal shrinkage test: The base film was punched into samples of 100 mm * 50 mm. Mark the number before baking with a marker and measure it with a two-dimensional measuring instrument. Set the baking temperature and time. After the oven reaches the specified temperature, place the base film along with the steel plate into the oven for baking. After the specified baking time, take it out and let it stand at room temperature for 10 minutes. Measure the transverse- and machine-direction dimensions of the same numbered base film after baking. If the edges of the sample shrink unevenly, take the position of maximum shrinkage as the standard. The test results are shown in Tables 2 to 4 below.

7. Puncture strength test: Use a high-speed tensile testing machine to pass a 1 mm prototype needle through the base film at a speed of 50 mm/min. The maximum force obtained is the puncture strength. Each group has 5 parallel samples, and the average value obtained is the puncture strength. The test results are shown in Tables 2 to 4 below.

8. Porosity test: The prepared base film sample was punched into rectangular samples with a 100 mm * 50 mm die cutter. The length L and width W of the rectangular sample were measured. Then, the thickness was measured with a 0.1 μm micrometer. Specifically, the thicknesses at a total of 5 points were measured, with 4 points on the edges and 1 point in the middle; and the average of the thicknesses of the 5 points was taken as the final thickness, which was recorded as T. The rectangular sample was weighed using an analytical balance with an accuracy of 0.0001 g, and the weight was recorded as M1. The measured length L, width W, and thickness T, and the material density $\rho$ of the base film were used to calculate the theoretical weight of the base film, recorded as M2, where M2 = L * W * T * $\rho$. Porosity = (1 - M1/M2) * 100%. The test results are shown in Tables 2 to 4 below.

9. Surface density test: The prepared base film sample was punched into rectangular samples with a 100 mm * 50 mm die cutter. The length L and width W of the rectangular sample were measured, the sheet-like base film was weighed, and the weight was recorded as M. Then, surface density = M/(L * W). The test results are shown in Tables 2 to 4 below.

10. Pore structure tortuosity calculation

The tortuosity of the pore structure was calculated according to the following formula:

$$\tau = \sqrt{\frac{t_{gur}\, \varepsilon d}{5.18 * 10^{-3} * L}}$$

where $\tau$ represents the tortuosity of the pore structure, $t_{gur}$ represents the air permeability of the base film (obtained in the above testing method), $\varepsilon$ represents the porosity of the base film (obtained in the above testing method), d represents the average pore size of the pore structure (obtained in the above testing method), in cm, and L represents the thickness of the base film (obtained in the above testing method), in cm. The obtained results are shown in Tables 2 to 4.

**Table 2: Test results for related parameters of polyethylene-based porous film**

| No. | | Example 1 | Example 2 | Example 3 | Example 4 | Example 5 | Example 6 | Example 7 | Example 8 | Example 9 | Example 10 | Example 11 | Example 12 | Example 13 | Example 14 |
|---|---|---|---|---|---|---|---|---|---|---|---|---|---|---|---|
| Thickness ($\mu$m) | | 5.1 | 4 | 6.2 | 5 | 5.1 | 4.9 | 4.8 | 5.1 | 5.2 | 5.1 | 5.2 | 5.1 | 5.1 | 5.1 |
| Surface density (g/m$^2$) | | 3.3 | 2.8 | 3.8 | 3.2 | 3.2 | 3.1 | 3 | 3.2 | 3.2 | 3.3 | 3.4 | 3.2 | 3.2 | 3.2 |
| Porosity (%) | | 32 | 26 | 36 | 33 | 34 | 33 | 34 | 34 | 35 | 32 | 31 | 34 | 35 | 34 |
| Average pore size (nm) | | 33.3 | 32.8 | 32.5 | 32.2 | 32.2 | 32.5 | 32.2 | 32.4 | 32.5 | 32.3 | 32.5 | 31.3 | 30.9 | 32.2 |
| Tortuosity | | 7.7 | 7.6 | 7.8 | 7.7 | 7.9 | 7.7 | 8.0 | 7.9 | 8.0 | 7.6 | 7.6 | 7.5 | 7 | 7.9 |
| Maximum pore size (nm) | | 40 | 39.6 | 39.5 | 38.5 | 38.7 | 39.5 | 38.7 | 39 | 39.6 | 38.9 | 39 | 37 | 35 | 38.7 |
| Air permeability (s/100cc) | | 146 | 140 | 166 | 145 | 149 | 141 | 146 | 151 | 150 | 148 | 153 | 140 | 140 | 149 |
| Puncture strength (gf) | | 330 | 275 | 321 | 334 | 352 | 332 | 331 | 326 | 321 | 351 | 345 | 320 | 330 | 280 |
| Tensile strength (kgf/cm$^2$) | M D | 2741 | 2427 | 2622 | 2544 | 2487 | 2491 | 2456 | 2323 | 2376 | 2376 | 2396 | 2123 | 2323 | 2087 |
| | TD | 2510 | 2185 | 2578 | 2354 | 2498 | 2374 | 2375 | 2351 | 2383 | 2356 | 2387 | 2051 | 2251 | 2098 |
| Elongation rate (%) | M D | 88 | 93 | 95 | 101 | 93 | 99 | 105 | 109 | 109 | 104 | 116 | 82 | 82 | 73 |
| | TD | 111 | 110 | 117 | 109 | 102 | 107 | 106 | 111 | 114 | 108 | 113 | 160 | 160 | 102 |
| Thermal shrinkage (%) (115°C/1h) | M D | 2.1 | 2.3 | 2.4 | 2 | 2.1 | 2 | 2.3 | 2.1 | 2.4 | 2.1 | 2.1 | 2.3 | 2.3 | 2.1 |
| | TD | 0.9 | 1.5 | 1.6 | 1.7 | 0.9 | 1.1 | 1.2 | 0.9 | 1.5 | 0.9 | 1.3 | 1.2 | 1.2 | 0.9 |

**Table 3: Test results for related parameters of polyethylene-based porous film**

| No. | | Example 15 | Example 16 | Example 17 | Example 18 | Example 19 | Example 20 | Example 21 | Example 22 | Example 23 |
|---|---|---|---|---|---|---|---|---|---|---|
| Thickness ($\mu$m) | | 5.1 | 5.3 | 5.2 | 5.1 | 5.0 | 5.2 | 7.0 | 2.1 | 5.1 |
| Surface density (g/m$^2$) | | 3.3 | 3.2 | 3.4 | 3.3 | 3.2 | 3.3 | 4.2 | 2.2 | 3.2 |
| Porosity (%) | | 33 | 32 | 33 | 33 | 33 | 32 | 36 | 26 | 31 |
| Average pore size (nm) | | 33 | 33 | 32 | 42 | 22 | 15 | 36 | 28 | 33 |
| Tortuosity | | 10 | 9.5 | 9.0 | 7.6 | 7.7 | 7.8 | 7.7 | 7.6 | 7.7 |
| Maximum pore size (nm) | | 36 | 35 | 36 | 45 | 25 | 20 | 40 | 30 | 37 |
| Air permeability (s/100cc) | | 150 | 140 | 135 | 120 | 145 | 150 | 160 | 100 | 130 |
| Puncture strength (gf) | | 330 | 340 | 335 | 330 | 338 | 335 | 360 | 500 | 420 |
| Tensile strength (kgf/cm$^2$) | MD | 2756 | 2467 | 2692 | 2574 | 2487 | 2491 | 2496 | 3323 | 2396 |
| | TD | 2570 | 2195 | 2598 | 2394 | 2498 | 2374 | 2365 | 3351 | 2393 |
| Elongation rate (%) | MD | 89 | 95 | 97 | 112 | 96 | 98 | 113 | 114 | 116 |
| | TD | 111 | 110 | 117 | 109 | 102 | 107 | 106 | 111 | 114 |
| Thermal shrinkage (%) (115°C/1h) | MD | 2.4 | 2.5 | 2.6 | 2.8 | 2.6 | 2.1 | 24 | 2.2 | 2.2 |
| | TD | 0.9 | 1.5 | 1.6 | 1.7 | 0.9 | 1.1 | 1.2 | 0.9 | 1.4 |

**Table 4: Test results for related parameters of polyethylene-based porous film**

| No. | | Comparative Example 1 | Comparative Example 2 | Comparative Example 3 | Comparative Example 4 | Comparative Example 5 | Comparative Example 6 |
|---|---|---|---|---|---|---|---|
| Thickness ($\mu$m) | | 5.5 | 5.2 | 5.2 | 5.2 | 5.1 | 5.2 |
| Surface density (g/m$^2$) | | 3.5 | 3.5 | 3.4 | 3.4 | 3.2 | 3.2 |
| Porosity (%) | | 25.3 | 26.5 | 31.2 | 29 | 31 | 31 |
| Average pore size (nm) | | 34.4 | 33.7 | 34.4 | 34.2 | 34.2 | 34.7 |
| Tortuosity | | 6.0 | 6.5 | 6.7 | 6.5 | 6.8 | 6.7 |
| Maximum pore size (nm) | | 44.8 | 46.1 | 44.3 | 45.3 | 44 | 46 |
| Air permeability (s/100cc) | | 116 | 128 | 112 | 114 | 114 | 112 |
| Puncture strength (gf) | | 237 | 248 | 218 | 235 | 267 | 287 |
| Tensile strength (kgf/cm$^2$) | MD | 2145 | 2433 | 2753 | 2533 | 2481 | 2677 |
| | TD | 1832 | 2587 | 2687 | 2387 | 2441 | 2322 |
| Elongation rate (%) | MD | 69 | 89 | 76 | 85 | 87 | 75 |
| | TD | 101 | 121 | 118 | 113 | 98 | 86 |
| Thermal shrinkage (%) (115°C/1h) | MD | 2.3 | 3.1 | 2.1 | 2.4 | 3.1 | 3.2 |
| | TD | 1.5 | 1.9 | 1.6 | 1.8 | 2.6 | 2.6 |

The base films of Examples 1 to 23 and Comparative Examples 1 to 6 were used to prepare lithium-ion batteries according to the following general preparation method.

**Preparation of lithium-ion battery**

(1) Preparation of positive electrode plate

The positive electrode active material LFP, conductive agent Super P, and binder polyvinylidene fluoride (PVDF) were mixed at a mass ratio of positive electrode active material: Super P:PVDF = 8:1:1. The mixture was added to the solvent N-methyl-2-pyrrolidone (NMP), and stirred well under the action of a vacuum mixer to obtain a positive electrode slurry, where the solid content of the positive electrode slurry was 50wt%. The positive electrode slurry was evenly applied onto the positive electrode current collector aluminum foil which was then dried at 85°C. Then, cold pressing, trimming, cutting, and slitting were performed, followed by drying under vacuum conditions at 85°C for 4 hours to obtain a positive electrode plate.

(2) Preparation of negative electrode plate

The negative electrode active material graphite, conductive agent Super P, thickener sodium carboxymethyl cellulose (CMC), and binder styrene-butadiene rubber emulsion (SBR) were mixed at a mass ratio of graphite: Super P:CMC:SBR = 80:15:3:2. The mixture was added to the solvent deionized water, and stirred well under the action of a vacuum mixer to obtain a negative electrode slurry, where the solid content of the negative electrode slurry was 30wt%. The negative electrode slurry was evenly applied onto the negative electrode current collector copper foil which was then dried at 85°C. Then, cold pressing, trimming, cutting, and slitting were performed, followed by drying under vacuum conditions at 120°C for 12 hours to obtain a negative electrode plate.

(3) Preparation of separator

The base film of Example 1 was provided. The inorganic particles aluminum oxide ($Al_2O_3$), organic particles polyvinylidene fluoride-hexafluoropropylene copolymer (with a number-average molecular weight of 550,000), and binder water-soluble polyacrylic acid were mixed well at a mass ratio of 79.1:20:0.9 in an appropriate amount of solvent deionized water to obtain a coating slurry with a solid content of 38% (by weight). The coating slurry was applied onto two surfaces of the base film using a coating machine, followed by processes such as drying and slitting to obtain a separator. The number of lines of the gravure roller of the coating machine was 125 LPI, the speed of coating was 50 m/min, the line speed ratio of coating was 1.2, the drying temperature was 50°C±5°C, and the drying time was 30s.

(4) Preparation of electrolyte

Ethylene carbonate (EC) and ethyl methyl carbonate (EMC) were mixed with a mass ratio of 30:70 to obtain an organic solvent. Fully dried electrolytic salt $LiPF_6$ was dissolved in the mixed solvent, with a concentration of the electrolytic salt being 1.0 mol/L, and was mixed well to obtain an electrolyte.

(5) The positive electrode plate in step (1), the separator in step (3), and the negative electrode plate in step (2) were stacked in sequence, so that the separator was sandwiched between the positive and negative electrode plates to provide separation. Then, the resulting stack was wound into a square bare cell which was then welded with the tabs, placed into a packaging foil aluminum film, and baked at 80°C to remove moisture, followed by electrolyte injection and sealing. Then, processes such as standing, hot and cold pressing, formation (charged to 3.3 V at a constant current of 0.02C, and then charged to 3.6 V at a constant current of 0.1C), shaping, and capacity testing were performed to obtain a finished soft-pack lithium-ion battery, with a thickness of 4.0 mm, a width of 60 mm, and a length of 140 mm.

The preparation methods of the secondary batteries of Examples 2 to 23 and Comparative Examples 1 to 6 were similar to that of the secondary battery of Example 1, except that different base films were used.

**Battery performance test**

1. Direct current resistance test of battery

At a specified temperature, short-time (30s) high-current charge/discharge was performed on the lithium-ion battery. The direct current resistance was obtained by calculating ratio of the voltage difference before and after charging/discharging to the current. The test conditions and test results are shown in Table 5 below.

2. Internal resistance test of battery

Alternating current resistance equipment: IT5100 series battery internal resistance tester from Itech. Test method: A fixed frequency of 1 kHz and a fixed current of 50 mA were applied to the cell under test, the voltage was sampled, and the resistance was calculated using a rectifier. The test results are shown in Table 5 below.

3. Self-discharge rate test of bare cell

After the cell was aged and cooled, the voltage was measured and recorded as OCV1. Then the cell was placed in an environment with normal temperature and humidity and left standing for 48 hours, and then the voltage was measured and recorded as OCVB. Then, self-discharge rate = (OCV1 - OCVB)/48 h. The test results are shown in Table 5.

4. Short-circuit pass rate test of bare cell

After winding, the bare cell was subjected to a short-circuit rate test under the conditions of 100 V, 80°C, 10s, and 5 MPa. The test results are shown in Table 5 below.

**Table 5**

| Test item | Direct current resistance at 25°C, 30s, and 10%SOC | Internal resistance of battery | Self-discharge rate | Short circuit rate |
|---|---|---|---|---|
| Example 1 | 3.50 mohm | 0.71 mΩ | 0.028 mv/h | 0.4% |
| Example 2 | 3.48 mohm | 0.72 mΩ | 0.026 mv/h | 0.6% |
| Example 3 | 3.52 mohm | 0.72 mΩ | 0.027 mv/h | 0.3% |

(continued)

| Test item | Direct current resistance at 25°C, 30s, and 10%SOC | Internal resistance of battery | Self-discharge rate | Short circuit rate |
|---|---|---|---|---|
| Example 4 | 3.51 mohm | 0.71 mΩ | 0.026 mv/h | 0.6% |
| Example 5 | 3.53 mohm | 0.72 mΩ | 0.025 mv/h | 0.6% |
| Example 6 | 3.50 mohm | 0.73 mΩ | 0.026 mv/h | 0.5% |
| Example 7 | 3.51 mohm | 0.71 mΩ | 0.026 mv/h | 0.6% |
| Example 8 | 3.52 mohm | 0.73 mΩ | 0.025 mv/h | 0.5% |
| Example 9 | 3.49 mohm | 0.72 mΩ | 0.025 mv/h | 0.6% |
| Example 10 | 3.50 mohm | 0.72 mΩ | 0.027 mv/h | 0.5% |
| Example 11 | 3.51 mohm | 0.72 mΩ | 0.026 mv/h | 0.4% |
| Example 12 | 3.53 mohm | 0.74 mΩ | 0.029 mv/h | 0.7% |
| Example 13 | 3.52 mohm | 0.71 mΩ | 0.027 mv/h | 0.4% |
| Example 14 | 3.53 mohm | 0.74 mΩ | 0.029 mv/h | 0.7% |
| Example 15 | 3.50 mohm | 0.73 mΩ | 0.027 mv/h | 0.5% |
| Example 16 | 3.58 mohm | 0.72 mΩ | 0.026 mv/h | 0.4% |
| Example 17 | 3.45 mohm | 0.71 mΩ | 0.028 mv/h | 0.3% |
| Example 18 | 3.52 mohm | 0.73 mΩ | 0.029 mv/h | 0.4% |
| Example 19 | 3.53 mohm | 0.71 mΩ | 0.027 mv/h | 0.5% |
| Example 20 | 3.50 mohm | 0.72 mΩ | 0.028 mv/h | 0.6% |
| Example 21 | 3.51 mohm | 0.75 mΩ | 0.025 mv/h | 0.5% |
| Example 22 | 3.55 mohm | 0.71 mΩ | 0.026 mv/h | 0.5% |
| Example 23 | 3.52 mohm | 0.71 mΩ | 0.026 mv/h | 0.7% |
| Comparative Example 1 | 3.80 mohm | 0.85 mΩ | 0.033 mv/h | 1.5% |
| Comparative Example 2 | 3.82 mohm | 0.88 mΩ | 0.037 mv/h | 2.1% |
| Comparative Example 3 | 3.81 mohm | 0.87 mΩ | 0.038 mv/h | 2.3% |
| Comparative Example 4 | 3.80 mohm | 0.89 mΩ | 0.036 mv/h | 2.2% |
| Comparative Example 5 | 3.82 mohm | 0.88 mΩ | 0.037 mv/h | 2.2% |
| Comparative Example 6 | 3.81 mohm | 0.93 mΩ | 0.039 mv/h | 2.2% |
| Note: 10%SOC means 10% state of charge. | | | | |

As can be seen from Table 5, the polyethylene-based porous film of this application has a high tortuosity of the pore structure, and the base film has a uniform pore structure, thereby improving the consistency of the base film, reducing performance deviation of the base film, and effectively ensuring the air permeability of the base film. When the polyolefin-based film of this application is used as a separator in a battery, the electrical performance of the battery can be significantly improved, including reducing the direct current resistance, internal resistance, self-discharge rate, and short-circuit rate of the battery.

According to comparison between Example 1 and Comparative Example 1, the weight-average molecular weight of the polyethylene used in Comparative Example 1 is not within the scope of this application, the tortuosity of the pore structure of the polyethylene-based porous film prepared in Comparative Example 1 is significantly smaller, and the direct current resistance, internal resistance, self-discharge rate, and short-circuit rate of the corresponding battery in Comparative Example 1 are significantly larger.

According to comparison between Example 1 and Comparative Example 2, the polydispersity index Mw/Mn of the polyethylene used in Comparative Example 2 is not within the scope of this application, the tortuosity of the pore structure of the polyethylene-based porous film prepared in Comparative Example 2 is significantly smaller, and the direct current resistance, internal resistance, self-discharge rate, and short-circuit rate of the corresponding battery in Comparative Example 2 are significantly larger.

According to comparison between Example 1 and Comparative Examples 3 and 6, the machine-direction drawing ratio and transverse-direction drawing ratio of Comparative Examples 3 and 6 are not within the scope of this application, the tortuosity of the pore structures of the polyethylene-based porous films prepared in Comparative Examples 3 and 6 is significantly smaller, and the direct current resistance, internal resistance, self-discharge rate, and short-circuit rate of the corresponding batteries in Comparative Examples 3 and 6 are significantly larger.

According to comparison between Example 1 and Comparative Examples 4 and 5, the solid content of the polyethylene in Comparative Examples 4 and 5 is not within the scope of this application, the tortuosity of the pore structures of the polyethylene-based porous films prepared in Comparative Examples 4 and 5 is significantly smaller, and the direct current resistance, internal resistance, self-discharge rate, and short-circuit rate of the corresponding batteries in Comparative Examples 4 and 5 are significantly larger.

The above descriptions are merely the preferred specific embodiments of this invention, but the protection scope of this invention is not limited thereto. Any changes or substitutions that can be easily conceived by those skilled in the art within the technical scope disclosed by this invention should fall within the protection scope of this invention. Therefore, the protection scope of this invention shall be subject to the protection scope of the claims.

## Claims

1. A polyolefin-based film, **characterized in that** the polyolefin-based film comprises a pore structure, thickness of the polyolefin-based film is $\leq 7$ $\mu$m, and tortuosity of the pore structure is 7-10.

2. The polyolefin-based film according to claim 1, wherein: the tortuosity of the pore structure is 7.5-9.5; and optionally, the tortuosity of the pore structure is 7.5-9.

3. The polyolefin-based film according to claim 1 or 2, wherein: a maximum pore size of the pore structure is $\leq 45$ nm; optionally, the maximum pore size of the pore structure is $\leq 40$ nm; and further optionally, the maximum pore size of the pore structure is 20 nm-40 nm.

4. The polyolefin-based film according to any one of claims 1 to 3, wherein: the thickness of the polyolefin-based film is 2 $\mu$m-6.2 $\mu$m; and optionally, the thickness of the polyolefin-based film is 4 $\mu$m-6.2 $\mu$m.

5. The polyolefin-based film according to any one of claims 1 to 4, wherein: the polyolefin-based film comprises polyolefin with a weight-average molecular weight Mw of more than 500,000; and optionally, the polyolefin-based film comprises polyolefin with a weight-average molecular weight Mw of 500,000-1,500,000.

6. The polyolefin-based film according to claim 5, wherein: a polydispersity index Mw/Mn of the polyolefin is $\leq 3.5$; and optionally, the polydispersity index Mw/Mn of the polyolefin is 1-3.5.

7. The polyolefin-based film according to claim 5, wherein the polyolefin is one or both of polyethylene and polypropylene.

8. The polyolefin-based film according to any one of claims 1 to 7, wherein air permeability of the polyolefin-based film is $\leq$ 180s/100cc.

9. The polyolefin-based film according to any one of claims 1 to 8, wherein:

   a machine-direction elongation rate of the polyolefin-based film is $\geq 60\%$; optionally, the machine-direction elongation rate of the polyolefin-based film is $\geq 100\%$; and further optionally, the machine-direction elongation rate of the polyolefin-based film is 100%-120%; and
   a transverse-direction elongation rate of the polyolefin-based film is $\geq 100\%$; optionally, the transverse-direction elongation rate of the polyolefin-based film is $\geq 110\%$; and further optionally, the transverse-direction elongation rate of the polyolefin-based film is 110%-160%.

10. The polyolefin-based film according to any one of claims 1 to 9, wherein the polyolefin-based film has a machine-direction thermal shrinkage of $\leq 4\%$ and a transverse-direction thermal shrinkage of $\leq 4\%$ at 115°C.

11. The polyolefin-based film according to any one of claims 1 to 10, wherein the polyolefin-based film meets at least one of the following conditions (1) to (4):

(1) the polyolefin-based film has a puncture strength of $\geq 270$ gf;
(2) the polyolefin-based film has a machine-direction tensile strength of $\geq 2000$ kgf/cm$^2$ and a transverse-direction tensile strength of $\geq 2000$ kgf/cm$^2$;
(3) the polyolefin-based film has a porosity of 25%-40%; and
(4) the polyolefin-based film has a surface density of 2-5 g/m2.

12. A preparation method of a polyolefin-based film, **characterized by** comprising:

mixing polyolefin and a pore-forming agent and making a resulting mixture into a film;
subjecting the film to biaxial drawing;
removing the pore-forming agent from the biaxially drawn film to form pores; and
subjecting the film formed with the pores to draw-setting and heat-setting to obtain the polyolefin-based film,
wherein the polyolefin-based film comprises a pore structure, thickness of the polyolefin-based film is $\leq 7 \mu$m, and tortuosity of the pore structure is 7-10.

13. The preparation method according to claim 12, wherein: the polyolefin has a weight-average molecular weight Mw of more than 500,000; and optionally, the polyolefin-based film comprises polyolefin with a weight-average molecular weight Mw of 500,000-1,500,000.

14. The preparation method according to claim 12 or 13, wherein a proportion of the polyolefin in the mixture is 20wt%-30wt%.

15. The preparation method according to any one of claims 12 to 14, wherein the biaxial drawing comprises machine-direction drawing and transverse-direction drawing, wherein:

a machine-direction drawing ratio is 5-15 times, a transverse-direction drawing ratio is 5-15 times, and the machine-direction drawing ratio and the transverse-direction drawing ratio are not both 5; and
optionally, the machine-direction drawing ratio is 6-15 times, and the transverse-direction drawing ratio is 6-15 times.

16. A separator, comprising the polyolefin-based film according to any one of claims 1 to 11 or a polyolefin-based film obtained using the preparation method according to any one of claims 12 to 15.

17. The separator according to claim 16, further comprising a coating provided on at least one surface of the polyolefin-based film.

18. The separator according to claim 17, wherein the coating comprises a filler, wherein the filler is selected from at least one of inorganic particles, organic particles, and organic-inorganic hybrid particles.

19. The separator according to claim 17 or 18, comprising an adhesive layer, wherein the adhesive layer is provided on at least a part of surface of the coating, the adhesive layer comprises a granular adhesive, and optionally, the granular adhesive comprises at least one of homopolymer or copolymer of acrylate monomers, homopolymer or copolymer of acrylic monomers, and homopolymer or copolymer of fluoroolefin monomers.

20. A secondary battery, comprising the separator according to any one of claims 16 to 19.

21. An electric apparatus, comprising the secondary battery according to claim 20.

FIG. 1

FIG. 2

FIG. 3

5

FIG. 4

5

53

52
52

51

FIG. 5

4    5    5

5

FIG. 6

FIG. 7

FIG. 8

FIG. 9

## INTERNATIONAL SEARCH REPORT

International application No.

**PCT/CN2023/088836**

### A. CLASSIFICATION OF SUBJECT MATTER

C08J9/28(2006.01)i; C08J9/26(2006.01)n; C08J9/00(2006.01)n; H01M50/489(2021.01)n; H01M50/491(2021.01)n; H01M50/494(2021.01)n; H01M50/417(2021.01)n

According to International Patent Classification (IPC) or to both national classification and IPC

### B. FIELDS SEARCHED

Minimum documentation searched (classification system followed by classification symbols)

C08J, H01M

Documentation searched other than minimum documentation to the extent that such documents are included in the fields searched

Electronic data base consulted during the international search (name of data base and, where practicable, search terms used)

CNTXT, WPABSC, ENTXTC, VEN, WPABS, ENTXT, DWPI: 聚烯烃, 隔膜, 多孔, 微孔, 厚度, 曲折度, 多分散指数, 重均分子量, 纵向拉伸, 横向拉伸, 双向拉伸, 孔隙率, 面密度, 透气度, polyolefin, porous, microporous, thick, curve, Mw/Mn, gas, permeation constant, Mw, MD, TD

### C. DOCUMENTS CONSIDERED TO BE RELEVANT

| Category* | Citation of document, with indication, where appropriate, of the relevant passages | Relevant to claim No. |
|---|---|---|
| X | CN 113631643 A (TORAY INDUSTRIES, INC.) 09 November 2021 (2021-11-09) description, paragraphs [0004]-[0333], and tables 1-2 and 6 | 1-19 |
| A | CN 111697189 A (FOSHAN JINHUI HI-TECH PHOTOELECTRIC MATERIAL CO., LTD.) 22 September 2020 (2020-09-22) entire document | 1-19 |
| A | CN 113921987 A (HUNAN AGRICULTURAL UNIVERSITY) 11 January 2022 (2022-01-11) entire document | 1-19 |
| A | JP 2011192528 A (TEIJIN LTD.) 29 September 2011 (2011-09-29) entire document | 1-19 |
| A | WO 2022099905 A1 (QINGDAO LANKETU MEMBRANE MATERIALS CO., LTD.) 19 May 2022 (2022-05-19) entire document | 1-19 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **07 July 2023** | **20 July 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

| INTERNATIONAL SEARCH REPORT | | | | International application No. | | | |
|---|---|---|---|---|---|---|---|
| **Information on patent family members** | | | | **PCT/CN2023/088836** | | | |

| Patent document cited in search report | | | Publication date (day/month/year) | Patent family member(s) | | | Publication date (day/month/year) |
|---|---|---|---|---|---|---|---|
| CN | 113631643 | A | 09 November 2021 | WO | 2020203908 | A1 | 08 October 2020 |
| | | | | JPWO | 2020203908 | A1 | 08 October 2020 |
| | | | | KR | 20210148126 | A | 07 December 2021 |
| | | | | KR | 102520879 | B1 | 12 April 2023 |
| | | | | EP | 3950789 | A1 | 09 February 2022 |
| | | | | EP | 3950789 | A4 | 11 January 2023 |
| CN | 111697189 | A | 22 September 2020 | CN | 111697189 | B | 28 June 2022 |
| CN | 113921987 | A | 11 January 2022 | | None | | |
| JP | 2011192528 | A | 29 September 2011 | | None | | |
| WO | 2022099905 | A1 | 19 May 2022 | KR | 20230052985 | A | 20 April 2023 |
| | | | | CN | 114512767 | A | 19 May 2022 |
| | | | | CN | 114512767 | B | 15 November 2022 |

Form PCT/ISA/210 (patent family annex) (July 2022)